# EUROPEAN PATENT APPLICATION

(11) **EP 4 672 833 A1**
(43) Date of publication of application: **31.12.2025**
(21) Application number: 24788938.9
(22) Date of filing: 28.03.2024
(51) Int. Cl.: H04W 56/00, H04W 52/02, H04W 8/00, H04W 72/12, H04W 84/12, H04W 84/18

(54) **ELECTRONIC DEVICE FOR PERFORMING DATA COMMUNICATION, AND OPERATING METHOD THEREOF**

(30) Priority: 12.04.2023 KR 20230047901; 14.04.2023 KR 20230049343
(71) Applicant: SAMSUNG ELECTRONICS CO., LTD., Yeongtong-gu, Suwon-si, Gyeonggi-do 16677 (KR)
(72) Inventor: JUNG, Buseop, Suwon-si, Gyeonggi-do 16677 (KR); KIM, Junsung, Suwon-si, Gyeonggi-do 16677 (KR)
(74) Representative: Gulde & Partner
(86) International application number: PCT/KR2024/003959
(87) International publication number: WO 2024/214995

(57) **Abstract**

Various embodiments of the present invention relate to a device and method for scheduling a data communication link in an electronic device. The electronic device comprises a communication circuit and a processor, wherein the processor may: configure an NDP for data communication, based on first scheduling information, with an external electronic device included in a NAN cluster; store information related to the NDP on the basis of switching to a low-power mode associated with the NDP connection; maintain synchronization with the external electronic device on the basis of the second scheduling information that is different from the first scheduling information; and, in the case of performing data communication with the external electronic device, perform data communication with the external electronic device through the NDP to the external electronic device on the basis of the information related to the NDP. Other embodiments may also be possible.

## Description

### [Technical Field]

An embodiment of the disclosure relates to an electronic device for performing data communication and a method of operating the same.

### [Background Art]

Due to the development of information communication technology and semiconductor technology, various electronic devices are used. These electronic devices may provide various types of proximity services using low-power discovery technology. These proximity services may indicate a communication function by which adjacent electronic devices rapidly exchange data through a proximity network. For example, proximity services may include a lower power proximity service using a Bluetooth Low Energy (BLE) beacon or a low-power proximity service based on low-power short-range communication technology (for example, neighbor awareness networking (NAN) and/or Wi-Fi Aware) (hereinafter, referred to as 'NAN') based on a wireless local area network (WLAN).

The low-power proximity service based on NAN may indicate a communication function of configuring a proximity network dynamically varying depending on movement of the electronic device to exchange data. Electronic devices included in a cluster may transmit and/or receive a signal for discovery (for example, a synchronization beacon) and a service discovery frame (SDF) in order to inform of the existence of the cluster within time duration (or communication direction) (for example, a discovery window (DW)) or perform synchronization. For example, the cluster may indicate a set of electronic devices included in the proximity network.

### [Disclosure of Invention]

### [Solution to Problem]

Electronic devices included in a cluster may configure (or generate) a NAN data path (NDP) to perform data communication in a section other than a discovery window (DW). For example, the electronic device included in the cluster may configure a time slot (for example, further available windows (FAWs) for data transmission in a section between discovery windows through a procedure of exchanging an SDF and configuring a data path with an external electronic device. The electronic device may transmit and/or receive data to and/or from an external electronic device through a time slot configured between discovery windows.

When data communication with the external electronic device ends, the electronic device may release the NAN data path (for example, NDP) with the external electronic device. When requiring the data communication with the external electronic device, the electronic device may configure again the NAN data path through the procedure of exchanging the SDF and configuring the data path with the external electronic device.

The electronic device may repeatedly perform the procedure of exchanging the SDF and configuring the data path for configuring the NAN data path whenever the data communication with the external electronic device is needed, so that the data communication with the external electronic device may be delayed.

An embodiment of the disclosure discloses an apparatus and a method for performing data communication with the external electronic device through the NDP by the electronic device.

The technical subjects pursued in the disclosure are not limited to the above mentioned technical subjects, and other technical subjects which are not mentioned may be clearly understood through the following descriptions by those skilled in the art of the disclosure.

According to an embodiment, an electronic device may include a communication circuit and a processor operatively connected to the communication circuit. According to an embodiment, the processor may configure an NAN data path (NDP) for data communication based on first scheduling information with an external electronic device included in an NAN cluster. According to an embodiment, the processor may be configured to store information related to the NDP, based on switching to a low-power mode related to an NDP connection. According to an embodiment, the processor may be configured to maintain synchronization with the external electronic device, based on second scheduling information different from the first scheduling information. According to an embodiment, when data communication with the external electronic device is performed, the processor may perform the data communication with the external electronic device through the NDP with the external electronic device, based on information related to the NDP.

According to an embodiment, a method of operating an electronic device may include configuring an NAN data path (NDP) for data communication based on first scheduling information with an external electronic device included in an NAN cluster. According to an embodiment, the method of operating the electronic device may include an operation of storing information related to the NDP, based on switching to a low-power mode related to an NDP connection. According to an embodiment, the method of operating the electronic device may include an operation of maintaining synchronization with the external electronic device, based on second scheduling information different from the first scheduling information. According to an embodiment, the method of operating the electronic device may include an operation of, in case that the data communication with the external electronic device is performed, performing the data communication with the external electronic device through the NDP with the external electronic device, based on the information related to the NDP.

According to an embodiment, a non-transitory computer-readable storage medium (or computer program product) for storing one or more programs may be described. According to an embodiment, one or more programs may include instructions configured to perform, when executed by a processor of an electronic device, configuring an NAN data path (NDP) for data communication based on first scheduling information with an external electronic device included in a neighbor awareness networking (NAN) cluster, storing information related to the NDP, based on switching to a low-power mode related to an NDP connection, maintaining synchronization with the external electronic device, based on second scheduling information different from the first scheduling information, and in case that the data communication with the external electronic device is performed, performing the data communication with the external electronic device through the NDP with the external electronic device, based on the information related to the NDP.

According to an embodiment of the disclosure, when the electronic device stores information related to the NDP configured with the external electronic device, based on the low-power mode, and performs data communication with the external electronic device while synchronization with the external electronic device is maintained, the electronic device may perform the data communication with the external electronic device, based on information related to the NDP without any procedure of configuring the NDP with the external electronic device, thereby reducing delay for the data communication with the external electronic device.

Effects which can be obtained from various embodiments of the disclosure are not limited to the above-mentioned effects, and other effects which have not been mentioned may be clearly understood by those skilled in the art to which various embodiments of the disclosure belong on the basis of the following description.

### [Brief Description of Drawings]

FIG. 1 is a block diagram of an electronic device within a network environment according to an embodiment.
FIG. 2 is a diagram illustrating an NAN cluster according to an embodiment.
FIG. 3 is a diagram illustrating a protocol for transmitting a signal of the electronic device included in the NAN cluster according to an embodiment.
FIG. 4 is a diagram illustrating an example of transmitting and/or receiving data within the NAN cluster according to an embodiment.
FIG. 5 is a block diagram of the electronic device for data communication according to an embodiment.
FIG. 6 is an example in which the electronic device configures an NDP with an external electronic device according to an embodiment.
FIG. 7 is a flowchart illustrating data communication between the electronic device and the external electronic device according to an embodiment.
FIG. 8 is a flowchart illustrating synchronization between the electronic device and the external electronic device according to an embodiment.
FIG. 9 illustrates an example in which the electronic device maintains synchronization with the external electronic device according to an embodiment.
FIG. 10 is a flowchart illustrating synchronization between the electronic device and the external electronic device according to an embodiment.
FIG. 11 illustrates an example in which the electronic device maintains synchronization with the external electronic device according to an embodiment.
FIG. 12 is a flowchart in which the electronic device performs data communication with the external electronic device according to an embodiment.
FIG. 13 is a flowchart in which the electronic device performs data communication with the external electronic device according to an embodiment.
FIG. 14 illustrates an example in which the electronic device configures the NDP with a plurality of external electronic devices according to an embodiment.

### [Mode for the Invention]

Hereinafter, various embodiments are described in detail with reference to the accompanying drawings.

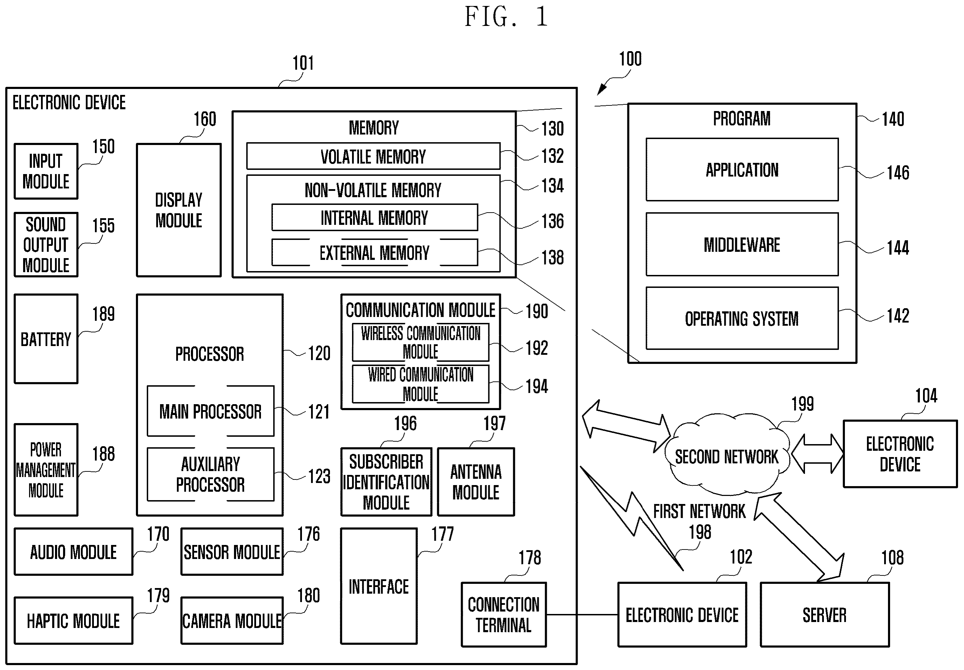

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. According to an embodiment, the subscriber identification module 196 may include a plurality of subscriber identification modules. For example, the plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include patch array antennas and/or dipole array antennas.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

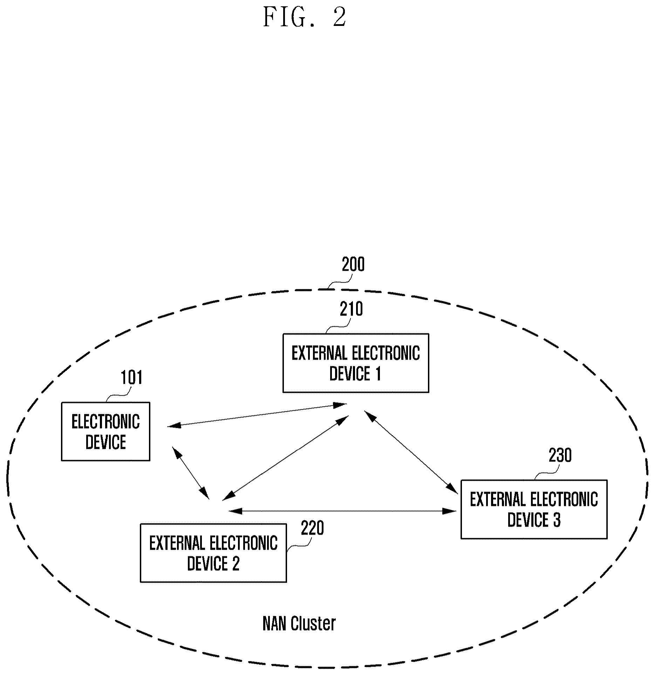

FIG. 2 is a diagram illustrating a neighbor awareness network (NAN) cluster according to various embodiments.

According to various embodiments, FIG. 2 is a diagram illustrating an example of the configuration of a NAN cluster 200 for a proximity network. According to one embodiment, the NAN cluster 200 may mean a set of electronic devices 101, 210, 220, and/or 230 that establish a proximity network so that the respective electronic device (or NAN devices) 101, 210, 220, and/or 230 can transmit and/or receive data to each other.

According to various embodiments, the NAN cluster 200 may include a plurality of electronic devices 101, 210, 220, and/or 230. The electronic devices 101, 210, 220 and/or 230 included in the NAN cluster 200 may transmit and/or receive a beacon (or discovery beacon), a service discovery frame (SDF), and/or a NAN action frame (NAF) within a synchronized time duration (or communication period) (e.g., a discovery window (DW)).

According to various embodiments, the electronic devices 101, 210, 220, and/or 230 within the NAN cluster 200 may have their time clocks synchronized with each other. For example, the electronic devices 101, 210, 220, and/or 230 may be synchronized to the time clock of one electronic device (e.g., the electronic device 101), and transmit and/or receive a beacon, an SDF, and/or an NAF in the synchronized (or same) discovery window.

According to one embodiment, the electronic device 101 supporting a low-power short-range communication technology based on NAN may broadcast a search signal (e.g., a beacon) to discover external electronic devices 210, 220, and/or 230 every predetermined first period (e.g., about 100 msec), and perform scanning every predetermined second period (e.g., about 10 msec) to receive the search signal broadcast from the external electronic devices 210, 220, and/or 230.

According to one embodiment, the electronic device 101 may detect at least one external electronic device 210, 220 and/or 230 located around the electronic device 101 based on the search signal received through scanning, and perform NAN cluster synchronization with the detected at least one external electronic device 210, 220 and/or 230. The NAN cluster synchronization may include an operation of receiving time clock information of an electronic device (e.g., the electronic device 101) representing a NAN cluster so that the electronic devices 101, 210, 220 and/or 230 included in the NAN cluster transmit and/or receive data on the same channel and/or during the same time.

According to one embodiment, each of the plurality of electronic devices 101, 210, 220 and/or 230 may form a single NAN cluster 200 that operates according to the synchronized time clock by transmitting a beacon and receiving a beacon from other electronic devices 101, 210, 220 and/or 230. The electronic devices 101, 210, 220 and/or 230 included in the NAN cluster 200 may perform NAN cluster synchronization (e.g., time and/or channel synchronization).

According to various embodiments, NAN cluster synchronization may be performed based on the time and channel of the electronic device (e.g., the electronic device 101) with the highest master preference within the NAN cluster 200. For example, the electronic devices 101, 210, 220, and/or 230 included in the NAN cluster 200 formed through discovery may exchange signals related to master preference information indicating a preference for operating as an anchor master device. The electronic devices 101, 210, 220, and/or 230 included in the NAN cluster 200 may determine the electronic device (e.g., the electronic device 101) with the highest master preference as an anchor master device (or a master electronic device) through the signals related to the master preference information.

According to various embodiments, the anchor master device (e.g., the electronic device 101) may mean an electronic device that serves as a reference for time and channel synchronization of the electronic devices 101, 210, 220, and/or 230 included in the NAN cluster 200. The anchor master device may be changed according to the master preference of the electronic devices 101, 210, 220, and/or 230. Each of the time and channel synchronized electronic devices 101, 210, 220, and/or 230 may transmit a beacon and/or an SDF within a discovery window (or a search period) that is repeated according to a predetermined cycle, and receive the beacon and the SDF from the other electronic devices 101, 210, 220, and/or 230 within the NAN cluster 200. In one embodiment, the beacon may be transmitted and/or received periodically every discovery window to continuously maintain time and channel synchronization of the electronic devices 101, 210, 220, and/or 230 within the NAN cluster 200. The SDF may be transmitted and/or received within the discovery window as needed to provide services to the discovered electronic devices 101, 210, 220, and/or 230. According to one embodiment, among the time and channel synchronized electronic devices 101, 210, 220, and/or 230, the electronic device (e.g., the electronic device 101) operating as the anchor master device may transmit a beacon (e.g., discovery beacon) during the interval between the discovery windows to detect new electronic devices.

According to one embodiment, each of the NAN cluster-synchronized (e.g., time and/or channel-synchronized) electronic devices 101, 210, 220, and/or 230 may transmit a NAN action frame (NAF) and receive NAFs from other electronic devices 101, 210, 220, and/or 230 within the NAN cluster 200 during a discovery window (or search interval) that repeats according to a predetermined cycle. For example, the NAF may include at least one of information related to configuring of a NAN data path (NDP), information related to scheduling update, or information related to NAN ranging to perform data communication in the interval between the discovery windows. For example, the NAF may control scheduling of wireless resources for coexistence of NAN operation and non-NAN operation (e.g., Wi-Fi Direct, mesh, IBSS, WLAN, Bluetooth, or NFC). The NAF may include time and/or channel information available for NAN communication.

According to various embodiments, each of the electronic devices 101, 210, 220, and/or 230 included in the NAN cluster 200 may operate in an active state only during the discovery window, and operate in a low-power state (e.g., a sleep state) during the remaining interval other than the discovery window, thereby reducing current consumption.

According to one embodiment, the discovery window is a period (e.g., in milliseconds) during which the electronic device 101, 210, 220, or 230 enters an active (or wake-up) state, consuming a significant amount of power. However, in the interval other than the discovery window, the electronic device 101, 210, 220, or 230 remains in a sleep state, enabling low-power discovery.

According to various embodiments, the electronic devices 101, 210, 220 and/or 230 included in the NAN cluster 200 may be simultaneously activated at the start time of the synchronized discovery window (e.g., DW start) and simultaneously transition to a sleep state at the end time of the discovery window (e.g., DW end).

According to various embodiments, each of the electronic devices 101, 210, 220, and/or 230 included in the NAN cluster 200 may transmit and/or receive data not only in the discovery window but also in the interval between the discovery windows. According to one embodiment, the electronic devices 101, 210, 220, and/or 230 included in the NAN cluster 200 may perform additional communication by configuring an active time slot in the interval between the discovery windows. For example, electronic devices 101, 210, 220 and/or 230 included in the NAN cluster 200 may transmit and/or receive SDFs that were not transmitted and/or received within the discovery window, through the active time slot. For example, the electronic devices 101, 210, 220 and/or 230 included in the NAN cluster 200 may perform NAN communication and/or non-NAN communication during the active time slot by configuring (or designating) a NAN communication operation period and/or a non-NAN communication operation period during the active time slot.

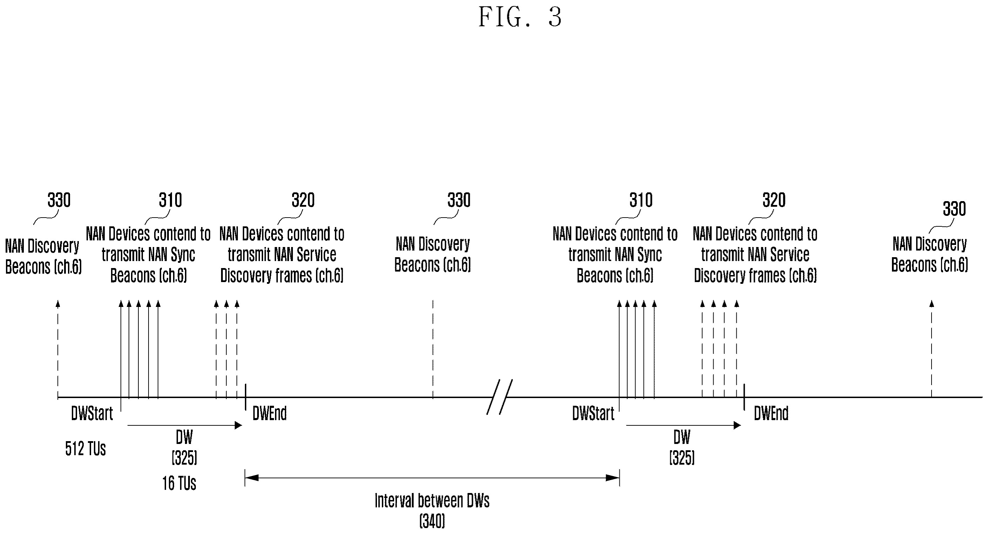

According to various embodiments, the electronic devices 101, 210, 220, and/or 230 included in the NAN cluster 200 may perform discovery, synchronization, and/or data exchange operations using a protocol illustrated in FIG. 3 described below.

FIG. 3 is a diagram illustrating a protocol for transmitting signals of an electronic device included in a NAN cluster according to various embodiments. According to various embodiments, FIG. 3 is a diagram illustrating an example of a discovery window. In FIG. 3, it may be illustrated that electronic devices (e.g., the electronic devices 101, 210, 220, and/or 230 of FIG. 2) included in one NAN cluster (e.g., the NAN cluster 200 of FIG. 2) transmit signals through a specific channel (e.g., channel 6 (Ch6)) based on a NAN standard.

According to various embodiments, the electronic devices 101, 210, 220 and/or 230 included in one NAN cluster (e.g., the NAN cluster 200 of FIG. 2) may transmit a sync beacon 310 and an SDF 320 in a synchronized discovery window 325. A discovery beacon 330 may be transmitted by at least one electronic device 101, 210, 220 and/or 230 in another interval 340 (e.g., an interval between discovery windows) other than the discovery window 325. According to one embodiment, the electronic devices 101, 210, 220 and/or 230 may transmit the sync beacon 310 and the SDF 320 on a contention basis. For example, the sync beacon 310 and the SDF 320 may be transmitted on the contention basis between the respective electronic devices 101, 210, 220 and/or 230 belonging to a NAN cluster (e.g., the NAN cluster 200 of FIG. 2).

According to various embodiments, the electronic devices 101, 210, 220, and/or 230 included in one NAN cluster (e.g., the NAN cluster (200) of FIG. 2) may transmit and/or receive NAFs in the discovery window 325. For example, the NAF may include at least one of information related to configuring of a NAN data path (NDP), information related to scheduling update, or information related to NAN ranging to perform data communication in the interval between the discovery windows.

According to various embodiments, the discovery window 325 may be a period during which the electronic devices 101, 210, 220, and/or 230 is activated from communication idle state (e.g., a sleep state) that is a power-saving mode, to communication state (e.g., a wake-up state) for the purpose of data exchange between the electronic devices 101, 210, 220, and/or 230. For example, the discovery window 325 may be divided into time units (TUs) which are millisecond units. According to one embodiment, the discovery window 325 for transmitting and receiving the sync beacon 310 and the SDF 320 may occupy 16 time units (16 TUs) and may have a cycle (or interval) that repeats with 512 time units (512 TUs).

According to various embodiments, the discovery beacon 330 may represent a signal transmitted so that other electronic devices that have not joined the NAN cluster (e.g., the NAN cluster 200 of FIG. 2) can discover the NAN cluster. For example, the discovery beacon 330 is a signal for notifying the existence of the NAN cluster, and the electronic devices that have not joined the NAN cluster may perform passive scanning to receive the discovery beacon 330, thereby discovering and joining the NAN cluster.

According to various embodiments, the discovery beacon 330 may include information necessary to synchronize with the NAN cluster (e.g., the NAN cluster 200 of FIG. 2). For example, the discovery beacon 330 may include at least one of a frame control (FC) field indicating the function of a signal (e.g., a beacon), a broadcast address, a media access control (MAC) address of a transmission electronic device, a cluster identifier (ID), a sequence control field, a time stamp for a beacon frame, a beacon interval indicating a transmission interval of the discovery beacon 330, or capability information about an electronic device transmitting the discovery beacon 330.

According to various embodiments, the discovery beacon 330 may include at least one proximity network (or NAN cluster) related information element. In one embodiment, the proximity network-related information may be referred to as attribute information.

According to various embodiments, the sync beacon 310 may indicate a signal for maintaining synchronization between the sync electronic devices 101, 210, 220, and/or 230 within the NAN cluster (e.g., the NAN cluster 200 of FIG. 2). The sync beacon 310 may be transmitted by the sync device among the electronic devices 1101, 210, 220, and/or 230 within the NAN cluster. For example, the sync device may include an anchor master device, a master device, or a non-master sync device defined in the NAN standard.

According to various embodiments, the sync beacon 310 may include information necessary for the electronic devices 101, 210, 220, and/or 230 to be synchronized within the NAN cluster (e.g., the NAN cluster 200 of FIG. 2). For example, the sync beacon 310 may include at least one of an FC field indicating the function of a signal (e.g., a beacon), a broadcast address, a MAC address of a transmission electronic device, a cluster ID, a sequence control field, a timestamp for a beacon frame, a beacon interval indicating the interval between the start points of the discovery windows 325, or capability information for a transmission electronic device. According to one embodiment, the sync beacon 310 may include at least one proximity network (or NAN cluster) related information element. For example, the proximity network-related information may include contents for a service provided through the proximity network.

According to various embodiments, the SDF 320 may represent a signal for exchanging data through the proximity network. According to one embodiment, the SDF 320 represents a vendor specific public action frame and may include various fields. For example, the SDF 320 may include a category or action field and include at least one piece of proximity network-related information.

According to various embodiments, the sync beacon 310, the SDF 320, and the discovery beacon 330 may include proximity network-related information. In one embodiment, the proximity network-related information may include an ID indicating a type of information, a length of the information, and a body field that is the corresponding information. According to one embodiment, the corresponding information may include at least one piece of master indication information, cluster information, service ID list information, service descriptor information, connection capability information, wireless LAN infrastructure information, peer to peer (P2P) operation information, independent basic service set (IBSS) information, mesh information, further proximity network service discovery information, further availability map information, country code information, ranging information, cluster discovery information, or vendor specific information.

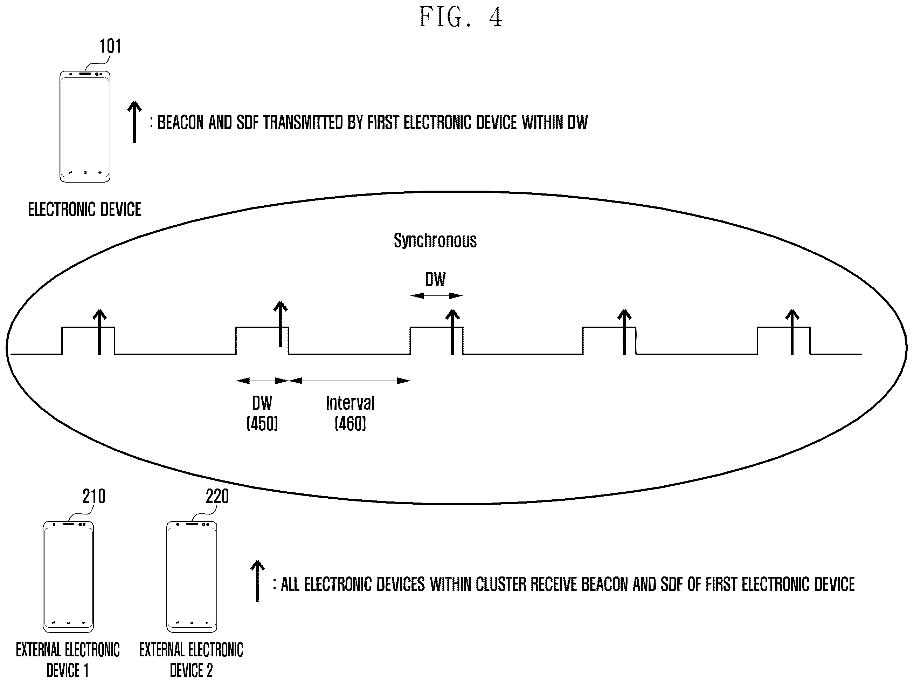

FIG. 4 is a diagram illustrating an example of data transmission and/or reception within a NAN cluster according to various embodiments.

According to various embodiments, FIG. 4 illustrates an example in which an electronic device 101, an external electronic device 1 210, and an external electronic device 2 220 form a single NAN cluster (e.g., the NAN cluster 200 of FIG. 2) through a wireless short-range communication technology, and each of the electronic devices 101, 210, and/or 220 may transmit and/or receive a beacon, an SDF, and/or an NAF to each other. According to one embodiment, FIG. 4 illustrates an example in which the electronic device 101 among the electronic devices 101, 210, and/or 220 forming the NAN cluster performs the role of a master electronic device.

According to various embodiments, the electronic device 101 may transmit a beacon, an SDF, and/or an NAF within a discovery window 450. The electronic device 101 may broadcast the beacon, the SDF, and/or the NAF every discovery window 450 that is repeated every predetermined interval (e.g., interval 460).

According to various embodiments, the external electronic device 1 210 and the external electronic device 2 220 may receive the beacon, the SDF, and/or the NAF transmitted by the electronic device 101. According to one embodiment, each of the external electronic device 1 210 and the external electronic device 2 220 may receive the broadcast beacon, the SDF, and/or the NAF from the electronic device 101 every discovery window 450.

According to various embodiments, the beacon transmitted within the discovery window 450 may include a sync beacon and include information for maintaining synchronization between the electronic devices 101, 210, and/or 220. For example, the external electronic device 1 210 and/or the external electronic device 2 220 may perform NAN cluster synchronization based on time clock information of the electronic device 101 included in the beacon transmitted by the electronic device 101 operating as a master. The external electronic device 1 210 and/or the external electronic device 2 220 may be synchronized based on the time clock information of the electronic device 101, so that the discovery window 450 may be activated at the same time.

According to various embodiments, in an interval other than the discovery window 450 (e.g., interval 460), the electronic devices 101, 210, and/or 220 may maintain communication idle state (e.g., a sleep state) to reduce current consumption. According to one embodiment, the electronic devices 101, 210, and/or 220 may operate in communication state (e.g., a wake state) only in the discovery window 450 based on a synchronized time clock to reduce current consumption.

According to various embodiments, in the interval other than the discovery window 450 (e.g., interval 460), the electronic devices 101, 210 and/or 220 may perform additional communication by configuring an active time slot. According to one embodiment, the electronic devices 101, 210 and/or 220 may transmit and/or receive SDFs that were not transmitted and/or received within the discovery window 450 through the active time slot. According to one embodiment, the electronic devices 101, 210 and/or 220 may perform a connection using legacy Wi-Fi or discovery operation through the active time slot by designating an operation for Wi-Fi Direct, mesh, IBSS, WLAN, Bluetooth or NFC connection in the active time slot.

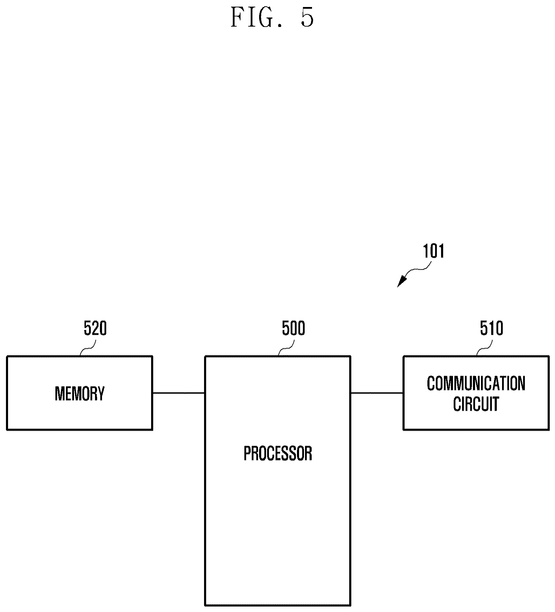

FIG. 5 is a block diagram of an electronic device for data communication according to an embodiment. According to an embodiment, the electronic device 101 of FIG. 5 may be at least partially similar to the electronic device 101 of FIG. 1, 2, 3, or 4 or include another embodiment of the electronic device.

According to an embodiment referring to FIG. 5, the electronic device 101 may include a processor 500 (for example, including processing circuitry), a communication circuit (or communication circuitry) 510, and/or a memory 520. For example, the processor 500 may be substantially the same as the processor 120 of FIG. 1 (for example, an application processor and/or a communication processor) or may be included in the processor 120. The communication circuit 510 may be substantially the same as the wireless communication module 192 of FIG. 1 or included in the wireless communication module 192. The memory 520 may be substantially the same as the memory 130 of FIG. 1 or may be included in the memory 130. According to an embodiment, the processor 500 may be operatively, functionally, and/or electrically connected to the communication circuit 510 and/or the memory 520. For example, the processor 500 may include at least one processor.

According to an embodiment, the communication circuit 510 may include various circuit structures used for modulating and/or demodulating a signal within the electronic device 101. For example, the communication circuit 510 may modulate a signal in a baseband into a signal in a radio frequency (RF) band to output the signal through an antenna (not shown) or demodulate (or decoding) the signal in the RF band received through the antenna into the signal in the baseband, and transmit the signal to the processor 500. For example, the communication circuit 510 may transmit and/or receive various pieces of data to and/or from external electronic devices (for example, the external electronic devices 210, 220, and/or 230 of FIG. 2) through a frequency band (for example, about 2.4 GHz band, about 5 GHz band, and/or about 6 GHz band) used by the electronic devices (for example, the electronic devices 101. 210, 220, and/or 230 of FIG. 2) of the NAN cluster (For example, the cluster 200 of FIG. 2).

According to an embodiment, the processor 500 may control the communication circuit 510 to configure the NAN cluster (for example, the NAN cluster 200 of FIG. 2) through neighbor awareness networking (NAN) cluster synchronization with at least one external electronic device (for example, the external electronic devices 210, 220, and/or 230 of FIG. 2). For example, the processor 500 may perform NAN cluster synchronization, based on NAN cluster information included in signals broadcasted by the external electronic devices (for example, the external electronic devices 210, 220, and/or 230 of FIG. 2) included in the cluster (or the network) (for example, the NAN cluster 200 of FIG. 2) implemented in the NAN scheme.

According to an embodiment, the processor 500 may receive NAN cluster information through a communication scheme (for example, Bluetooth, Bluetooth low energy (BLE), near field communication (NFC), quick response (QR), or short-range wireless communication including WLAN (for example, Wi-Fi)) other than the NAN-based scheme. For example, the processor 500 may control the communication circuit 510 to transmit a probe request signal for discovering the external electronic device (for example, the external electronic devices 210 and 220, and/or 230 of FIG. 2) through the WLAN (for example, Wi-Fi) network. The processor 500 may perform NAN cluster synchronization on the basis of NAN cluster information included in a probe response message received from the external electronic devices (for example, the external electronic devices 210, 220, and/or 230 of FIG. 2) in response to the probe request signal.

According to an embodiment, NAN cluster synchronization may include a series of operations for receiving time clock information of the electronic device 101 (for example, a master device or an anchor master device) that represents the NAN cluster to allow the electronic devices (for example, the electronic devices 101, 220, and/or 230 of FIG. 2) included in the NAN cluster (for example, the NAN cluster 200 of FIG. 2) to transmit and/or receive signals and/or data through the same channel and/or the same time resources. For example, the processor 500 may control the communication circuit 510 to transmit (or broadcast) a beacon including time clock information of the electronic device 101 through a discovery window to perform NAN cluster synchronization of the external electronic devices (for example, the external electronic devices 210, 220, and/or 230 of FIG. 2). For example, the processor 500 may perform NAN cluster synchronization, based on time clock information of the external electronic devices (for example, the external electronic devices 210, 220, and/or 230 of FIG. 2) included in the beacon received from the external electronic devices (for example, the external electronic devices 210, 220, and/or 230 of FIG. 2).

According to an embodiment, the processor 500 may control the communication circuit 510 to perform a search related to the external electronic device for data transmission. For example, the search for the external electronic device may be performed based on the generation of a data transmission event. For example, the data transmission event may be generated based on at least one of the execution of a function or application program related to data transmission, an input of a control signal related to data transmission, or reception of a user input related to data transmission.

For example, the processor 500 may control the communication circuit 510 to perform the search for the external electronic device for data transmission through Bluetooth (or BLE) message exchange. For example, the Bluetooth (or BLE) message exchange may include a series of operations for transmitting a BLE advertisement message including information related to the data transmission event and receiving a BLE response message for the BLE advertisement message. For example, the BLE advertisement message may include information related to the data transmission event and information related to the NAN. For example, the processor 500 may control the communication circuit 620 to activate NAN communication, based on transmission of the BLE advertisement message. For example, the external electronic device (for example, the external electronic devices 210, 220, and/or 230 of FIG. 2) may activate NAN communication, based on reception of the BLE advertisement message.

For example, the electronic device 101 and the external electronic devices 210, 220, and/or 230 of FIG. 2) having NAN communication activated through Bluetooth (or BLE) message exchange may perform NAN cluster synchronization.

For example, the processor 500 may control the communication circuit 510 to search for the external electronic device for data transmission through SDF exchange within a discovery window synchronized with the external electronic device, based on NAN cluster synchronization.

According to an embodiment, the processor 500 may configure a NAN data path with the external electronic device for data transmission. For example, the processor 500 may control the communication circuit 510 to transmit at least one piece of NAN availability attribute or non-NAN operation scheduling information (unaligned scheduled attribute) including information related to first scheduling for data communication with the external electronic device to the external electronic device. For example, at least one piece of the NAN availability information or the non-NAN operation scheduling information may be included in a beacon, an SDF, and/or an NAF and transmitted to the external electronic device through the discovery window. For example, the NAN availability information may include information related to one of channel information to be used for each further available window (FAW), frequency band information, a start time point (start offset), duration (bit duration), or a repetition period. For example, the channel information may designate an operating class and may be used for configuring a primary channel. For example, the frequency band information may include information related to a frequency band (for example, a band of about 2.4 GHz, a band of about 5 GHz, and/or a band of about 6 GHz) to be used for data communication with the external electronic device. For example, the start time point may be used to indicate how far the further available window (FAW) starts from the discovery window (DW). For example, the duration may be used to indicate a maintenance time of the further availability window (FAW). For example, the repetition period may be used to indicate a period on which the further availability window (FAW) starts again. For example, the further availability window may include a NAN slot in which the electronic device 101 transmits and/or receives data to and/or from the external electronic device between discovery windows. For example, the information related to first scheduling may include at least one piece of lower scheduling information corresponding to each of at least one additional available window for data communication between the electronic device 101 and the external electronic device. For example, lower scheduling information may include index information of a scheduling pattern corresponding to an additional available window among predefined different scheduling patterns.

According to an embodiment, the processor 500 may receive a response signal for first scheduling information from the external electronic device. For example, when the response signal includes information related to "accept", the processor 500 may determine that data communication can be performed with the external electronic device, based on the first scheduling information transmitted to the external electronic device. For example, when the response signal includes information related to "counter", the processor 500 may identify first scheduling information modified by the external electronic device. When determining that the modified first scheduling information is accepted, the processor 500 may determine that data communication can be performed with the external electronic device, based on the modified first scheduling information. For example, when the response signal includes information related to "reject", the processor 500 may determine that data communication can not be performed with the external electronic device.

According to an embodiment, the processor 500 may control the communication circuit 510 to perform data communication through an NDP configured with the external electronic device, based on the first scheduling information. For example, the processor 500 may control the communication circuit 510 to transmit and/or receive data to and/or from the external electronic device through at least one time interval (for example, additional available window) configured based on the first scheduling information between discovery windows.

According to an embodiment, the processor 500 may store information related to the NDP with the external electronic device, based on the generation of an event related to switching to a low-power mode. For example, the information related to the NDP may include at least one piece of information shared through SDP exchange with the external electronic device, information related to first scheduling, authentication information related to the external electronic device, security configuration information, identification information of the electronic device and/or the external electronic device, or identification information for NDP recognition in firmware. For example, the information shared through SDF exchange may include at least one piece of scheduling information related to service descriptor attribute (SDA), service descriptor extension attribute (SDEA), or NAN availability. For example, the information related to first scheduling may include at least one of NAN availability, NAN data cluster (NDC), NAN data link (NDL), sub-slot scheduling (S3), or unaligned schedule. For example, the security configuration information may include at least one piece of information related to a key included in cipher suite information attribute (CSIA), security context information attribute (SCIA), shared key descriptor attribute (SKDA), element container attribute (ECA), or SKDA. For example, the identification information of the electronic device and/or the external electronic device may include at least one of a command ID, an NDP ID, a service ID, an account ID, a device (or peer) ID, device information, or a device address. For example, the identification information for NDP recognition may include at least one of an NDP ID, SDF information, or an SDF ID. For example, the event related to switching to the low-power mode may be generated based on at least one of termination of a function or application program related to data transmission or an amount of traffic with the external electronic device (for example, an amount of transmitted and/or received data). For example, the information related to the NDP may be stored at a time point at which it is determined that the NDP configuration with the external electronic device is completed.

According to an embodiment, the processor 500 may maintain synchronization (for example, time synchronization) with the external electronic device, based on second scheduling information to maintain the NDP with the external electronic device, based on the generation of the event related to switching to the low-power mode. For example, the processor 500 may control the communication circuit 510 to transmit control information related to switching to the low-power mode and scheduling change information to the external electronic device, based on the generation of the event related to switching to the low-power mode. For example, the control information related to switching to the low-power mode may include information related to second scheduling for maintaining synchronization with the external electronic device. For example, the scheduling change information may include information related to removal of each of at least one lower scheduling related to data communication using the NDP included in the first scheduling information. For example, the control information related to switching to the low-power mode and/or the scheduling change information may be transmitted based on service descriptor attribute (SDA), service descriptor extension attribute (SDEA), vendor specific information element (VISE), vendor specific attribute (VSA), or out of band (OOB) communication. For example, the OOB communication may include other communication schemes different from the WLAN for NAN communication such as Bluetooth, BLE, or NFC.

For example, when configured as a master device for synchronization with the external electronic device, the processor 500 may control the communication circuit 510 to transmit a synchronization beacon through a predetermined transmission interval configured based on the second scheduling information. For example, the electronic device 101 and the external electronic device may operate in a communication state (for example, a wakeup state) during a predetermined transmission interval and operate in a communication idle state during the remaining intervals except for the predetermined transmission interval. For example, the external electronic device may maintain synchronization with the electronic device 101, based on the synchronization beacon received from the electronic device 101 during the predetermined transmission interval. For example, the predetermined transmission interval may indicate a time interval configured based on the second scheduling information for maintaining synchronization between the electronic device 101 operating in the low-power mode and the external electronic device. For example, the size of the predetermined transmission interval may correspond to a discovery window for NAN communication, and the period of the predetermined transmission interval may be configured as an integer multiple of the period of the discovery window. For example, when the electronic device 101 operates in the low-power mode, the processor 500 may control the communication circuit 510 to limit transmission of a discovery beacon through the discovery window even when configured as the master device for synchronization with the external electronic device.

For example, when not configured as the master device for synchronization with the external electronic device, the processor 500 may maintain synchronization with the external electronic device, based on the synchronization beacon received from the external electronic device during the predetermined transmission interval configured based on the second scheduling information.

For example, when accessing the same access point (AP) as that of the external electronic device, based on AP time information (for example, a time synchronization function (TSF)) received from the AP, the processor 500 may maintain synchronization with the external electronic device during the predetermined transmission interval configured based on the second scheduling information. For example, the AP time information (for example, TSF) may be acquired from the AP through a predetermined separate reception interval configured independently from the predetermined transmission interval.

According to an embodiment, based on the generation of an event related to release of the low-power mode, the processor 500 may control the communication circuit 510 to perform data communication with the external electronic device, based on information related to the NDP. For example, based on the information related to the NDP, the electronic device 101 and the external electronic device may omit a procedure of exchanging the SDF related to the NDP configuration, a procedure of configuring a data path, an authentication procedure, and/or a procedure of configuring security, and perform data communication. For example, the event related to release of the low-power mode may be generated based on at least one of execution of a function or application program related to data transmission, an input of a control signal related to data transmission, or reception of a user input related to data transmission.

For example, the processor 500 may identify whether first scheduling information can be supported based on the generation of the event related to release of the low-power mode. When determining that the first scheduling information can be supported, the processor 500 may control the communication circuit 510 to transmit control information related to release of the low-power mode to the external electronic device. For example, the processor 500 may control the communication circuit 510 to transmit information related to addition of at least one lower scheduling included in the first scheduling information to the external electronic device.

For example, when determining that the first scheduling information cannot be supported, the processor 500 may control the communication circuit 500 to transmit information related to third scheduling for data communication with the external electronic device and control information related to release of the low-power mode to the external electronic device. For example, the information related to third scheduling may include information related to addition of lower scheduling supported by the electronic device 101 and information related to removal of lower scheduling that is not supported by the electronic device 101 among at least one lower scheduling included in the first scheduling information. For example, the information related to third scheduling may include information related to addition of new lower scheduling that is not included in the first scheduling information.

For example, the processor 500 may control the communication circuit 510 to perform data communication through the NDP configured with the external electronic device, based on the first scheduling information or the third scheduling information.

For example, when receiving information related to fourth scheduling from the external electronic device, the processor 500 may identify whether the fourth scheduling can be supported. When determining to support the fourth scheduling, the processor 500 may control the communication circuit 510 to perform data communication through the NDP configured with the external electronic device, based on the fourth scheduling information.

According to an embodiment, the processor 500 may control the communication circuit 510 to additionally configure the NDP with another external electronic device in the state where the NDP connection with the external electronic device is switched to the low-power mode. For example, when another external electronic device for data communication is found in the state where the NDP connection with the external electronic device is switched to the low-power mode, the processor 500 may control the communication circuit 510 to make the NDP configuration with the other external electronic device. For example, the processor 500 may control the communication circuit 510 to perform data communication with the other external electronic device through the NDP with the other external electronic device. The processor 500 may switch the NDP connection with the other external electronic device to the low-power mode, based on the generation of an event related to switching to the low-power mode corresponding to the other external electronic device. For example, the processor 500 may independently manage the NDP connection with the external electronic device switching to the low-power mode and the NDP connection with the other external electronic device. For example, the state in which the NDP connection with the external electronic device is switched to the low-power mode may include a state in which the electronic device 101 stores information related to the NDP with the external electronic device and maintains synchronization with the external electronic device, based on second scheduling information. For example, the search for the other external electronic device may be performed based on at least one of OOB communication, a 3-layer search related to universal plug and play (uPnP), or a WLAN search (for example, Wi-Fi direct or NAN communication).

According to an embodiment, when a plurality of external electronic devices included in the same group as that of the electronic device 101 is found, the processor 500 may control the communication circuit 510 to configure the NDP with each of the external electronic devices. The processor 500 may control the communication circuit 510 to operate the NDP configuration with at least one external electronic device which does not perform data communication in the low-power mode among the plurality of external electronic devices. For example, when there is an external electronic device for data communication among at least one external electronic device operating in the low-power mode, the processor 500 may perform data communication by releasing the low-power mode of the external electronic device for data communication. For example, the plurality of external electronic devices included in the same group as that of the electronic device 101 may include external electronic devices including the same user account as that of the electronic device 101. For example, the same group as that of the electronic device 101 may include at least one of a family group, a business group, a club group, or a friend group including the electronic device 101. For example, the plurality of external electronic devices included in the same group as that of the electronic device 101 may be found based on at least one of OOB communication, a 3-layer search related to universal plug and play (uPnP), or a WLAN search (for example, Wi-Fi direct or NAN communication).

According to an embodiment, the memory 520 may store various pieces of data used by at least one component (for example, the processor 500 and/or the communication circuit 510) of the electronic device 101. For example, the memory 520 may store various instructions executable through the processor 500. For example, the instructions may be individually or collectively executed by the processor 500 (for example, at least one processor).

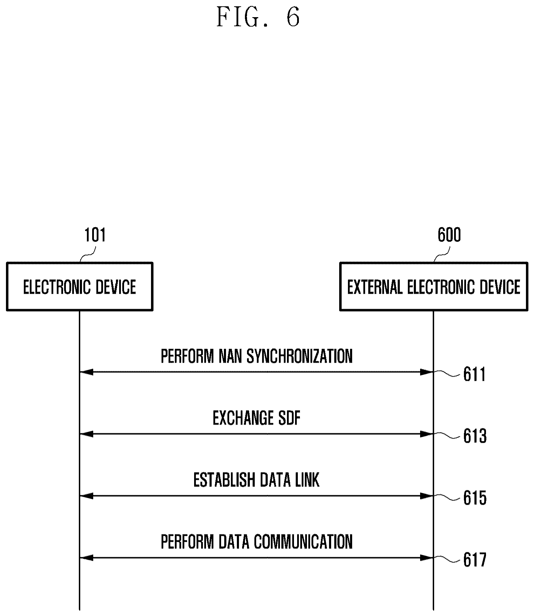

According to an embodiment, an electronic device (for example, the electronic device 101 of FIG. 1, 2, 3, 4, 5, or 6) may include a communication circuit (for example, the wireless communication module 192 of FIG. 1 or the communication circuit 510 of FIG. 5) and a processor (for example, the processor 120 of FIG. 1 or the processor 500 of FIG. 5) operatively connected to the communication circuit. According to an embodiment, the processor may be configured to configure an NAN data path (NDP) for data communication based on first scheduling information with an external electronic device (for example, the external electronic device 210, 220, or 230 of FIG. 2, or the external electronic device 600 of FIG. 6) included in a NAN cluster (for example, the NAN cluster 200 of FIG. 2). According to an embodiment, the processor may be configured to store information related to the NDP, based on switching to a low-power mode related to an NDP connection. According to an embodiment, the processor may be configured to maintain synchronization with the external electronic device, based on second scheduling information different from the first scheduling information. According to an embodiment, when data communication with the external electronic device is performed, the processor may be configured to perform the data communication with the external electronic device through the NDP with the external electronic device, based on information related to the NDP.

According to an embodiment, the processor may be configured to configure the NDP with the external electronic device through service discovery frame (SDF) exchange with the external electronic device related to first scheduling information and a data link configuration.

According to an embodiment, the processor may be configured to determine whether to switch the NDP connection with the external electronic device to the low-power mode, based on an amount of data transmitted and/or received to and/or from the external electronic device for a predetermined time.

According to an embodiment, the processor may be configured to determine whether to switch the NDP connection with the external electronic device to the low-power mode, based on driving information of a function or an application program related to the data communication.

According to an embodiment, in case that the electronic device is configured as a master device, the processor may be configured to transmit a synchronization beacon during a predetermined transmission interval configured based on second scheduling information.

According to an embodiment, in case that the electronic device is not configured as a master device, the processor may be configured to maintain the synchronization with the external electronic device, based on the synchronization beacon received from the external electronic device during the predetermined transmission interval configured based on the second scheduling information.

According to an embodiment, in case that the electronic device and external electronic device are connected to an equal access point (AP), the processor may be configured to maintain the synchronization with the external electronic device, based on time information of the AP.

According to an embodiment, in case that the data communication with the external electronic device is performed, the processor may be configured to perform the data communication with the external electronic device through the NDP with the external electronic device, based on first scheduling information, according to determination that at least one lower scheduling included in the first scheduling information can be supported.

According to an embodiment, in case that it is determined that at least some of at least some lower scheduling included in the first scheduling information cannot be supported, the processor may be configured to generate third scheduling information, based on the first scheduling information and perform the data communication with the external electronic device through the NDP with the external electronic device, based on the third scheduling information.

FIG. 6 is an example in which an electronic device configures an NDP with an external electronic device according to an embodiment.

According to an embodiment referring to FIG. 6, the electronic device 101 and an external electronic device 600 (for example, the external electronic device 210, 220, or 230 of FIG. 2) may perform NAN cluster synchronization in operation 611. For example, the electronic device 101 and the external electronic device 600 may perform synchronization with an NAN cluster, based on NAN cluster information included in signals broadcasted by electronic devices (for example, the electronic devices 101, 210, 220, and/or 230 of FIG. 2) included in a cluster (or network) (for example, the cluster 200 of FIG. 2) implemented in an NAN scheme. For example, NAN cluster synchronization may include a series of operations in which the electronic device 101 and the external electronic device 600 included in the NAN cluster synchronize time resources and frequency resources (for example, channels). For example, the NAN cluster synchronization may be performed on the basis of time clock information of an electronic device (or a master device of the NAN cluster) (for example, the electronic device 101 of FIG. 2) which represents the electronic devices (for example, the electronic devices 101, 210, 220, and/or 230 of FIG. 2) included in the NAN cluster.

According to an embodiment, the electronic device 101 may search for the external electronic device 600 for data transmission through SDF exchange within a discovery window synchronized with at least one external electronic device included in the NAN cluster, based on NAN cluster synchronization in operation 613. For example, the electronic device 101 may transmit an SDF subscribe message within the discovery window, based on the generation of a data transmission event. The external electronic device 600 may transmit an SDF publish message within the discovery window in response to the SDF subscribe message received from the electronic device 101 within the discovery window. The electronic device 101 may identify the external electronic device 600 for data communication, based on the SDF publish message. The electronic device 101 may transmit an SDF addition message within the discovery window in response to the SDF publish message.

According to an embodiment, the electronic device 101 and the external electronic device 600 may establish a data link for data communication in operation 615. For example, the electronic device 101 may transmit information related to first scheduling for data communication with the external electronic device 600 to the external electronic device. For example, the information related to first scheduling may be transmitted through a beacon, an SDF, and/or an NAF within the discovery window. For example, the information related to first scheduling may include at least one piece of lower scheduling information corresponding to each of at least one additional available window for data communication between the electronic device 101 and the external electronic device 600.

For example, the external electronic device 600 may transmit a response signal corresponding to the information related to first scheduling received from the electronic device 101. For example, the response signal may include information related to "accept" of the information related to first scheduling, information related to "counter" including the information related to the modified first scheduling, or information related to "reject" of the information related to first scheduling.

For example, when receiving the information related to "accept" of the information related to first scheduling, the electronic device 101 may determine that an NDP based on the first scheduling information is configured with the external electronic device 600.

For example, when receiving the information related to "counter" of the modified information related to first scheduling, the electronic device 101 may identify the first scheduling information modified by the external electronic device. When determining to accept the modified first scheduling information, the electronic device 101 may determine that the NDP based on the modified first scheduling information is configured with the external electronic device 600.

For example, when receiving the information related to "reject" of the information related to first scheduling, the electronic device 101 may determine that data communication with the external electronic device 600 cannot be performed.

For example, the electronic device 101 and the external electronic device 600 may perform an authentication procedure for data communication and a security configuration procedure.

According to an embodiment, the electronic device 101 and the external electronic device 600 may perform data communication through the configured NDP, based on first scheduling information (or modified first scheduling information) in operation 617.

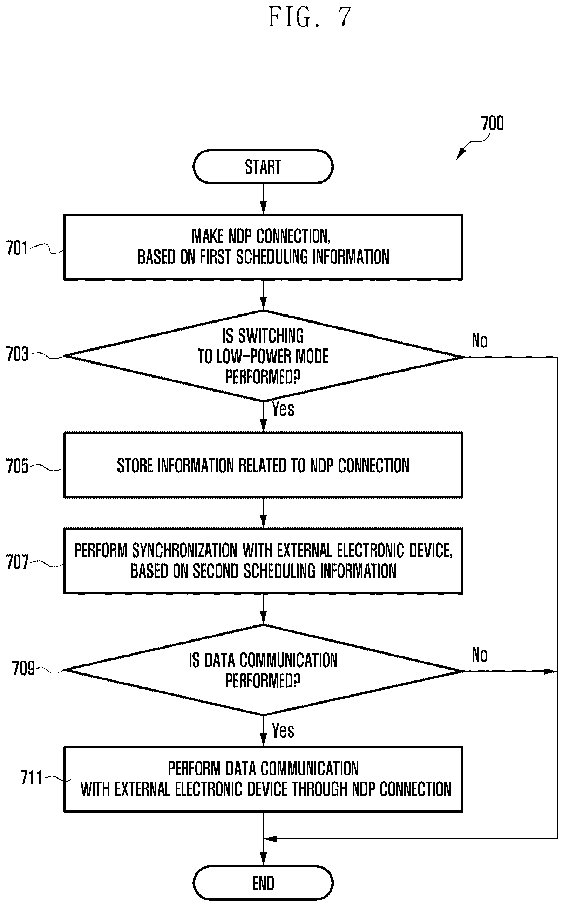

FIG. 7 is a flowchart 700 illustrating data communication between an electronic device and an external electronic device according to an embodiment. In the following embodiments, respective operations may be sequentially performed but the sequential performance is not necessary. For example, orders of the operations may be changed, and at least two operations may be performed in parallel. For example, the electronic device of FIG. 7 may be the electronic device 101 of FIG. 1, 2, 3, 4, 5, or 6.

According to various embodiments referring to FIG. 7, an electronic device (for example, the electronic device 101 of FIG. 1, 2, 3, 4, 5, or 6) or a processor (for example, the processor 120 of FIG. 1 or the processor 500 of FIG. 5) may make an NDP connection with an external electronic device (for example, the external electronic devices 210, 220, or 230 of FIG. 2 or the external electronic device 600 of FIG. 6) included in an NAN cluster (for example, the NAN cluster 200 of FIG. 2), based on first scheduling information, in operation 701. For example, the processor 500 may detect the external electronic device 600 for performing data communication through SDF exchange within a synchronized discovery window in the NAN cluster. For example, the SDF exchange may include a series of operations for transmitting an SDF subscribe message within the discovery window and receiving an SDF publish message in response to the SDF subscribe message.

For example, the processor 500 may control the communication circuit 510 to establish a data link based on first scheduling information with the external electronic device 600 for performing data communication. For example, establishment of the data link may include a series of operations for negotiating scheduling information for data communication between the electronic device 101 and the external electronic device 600 within the discovery window.

For example, the processor 500 may control the communication circuit 510 to perform data communication with the external electronic device through the NDP with the external electronic device 600, based on the first scheduling information. For example, the data communication with the external electronic device may be performed through a frequency band and an additional available window configured based on the first scheduling information.

According to an embodiment, the electronic device (for example, the electronic device 101) or the processor (for example, the processor 120 or 500) may identify whether switching to a low-power mode is performed in operation 703. For example, when an event related to switching to the low-power mode is generated in the state where the NDP is established with the external electronic device, the processor 500 may determine to switch to the low-power mode. For example, the event related to switching to the low-power mode may be generated based on at least one of termination of a function or an application program related to data transmission or an amount of traffic with the external electronic device.

According to an embodiment, when determining not to switch to the low-power mode (for example, "No" of operation 703), the electronic device (for example, the electronic device 101) or the processor (for example, the processor 120 or 500) may end an embodiment for data communication with the external electronic device. For example, when the event related to switching to the low-power mode is not generated, the processor 500 may control the communication circuit 510 to perform data communication with the external electronic device through the NDP with the external electronic device.

According to an embodiment, when determining to switch to the low-power mode ("Yes" of operation 703), the electronic device (for example, the electronic device 101) or the processor (for example, the processor 120 or 500) may store information related to the NDP established with the external electronic device in operation 705. For example, the information related to the NDP may include at least one piece of information shared through SDP exchange with the external electronic device, information related to first scheduling, authentication information related to the external electronic device, security configuration information, identification information of the electronic device and/or the external electronic device, or identification information for NDP recognition in firmware.

According to an embodiment, the electronic device (for example, the electronic device 101) or the processor (for example, the processor 120 or 500) may maintain synchronization with the external electronic device, based on second scheduling information in operation 707. For example, when determining to switch to the low-power mode, the processor 500 may control the communication circuit 510 to transmit control information related to switching to the low-power mode and scheduling change information to the external electronic device 600. For example, as shown in [Table 1], the control information related to switching to the low-power mode may include information related to second scheduling for maintaining synchronization between the electronic device 101 and the external electronic device, based on synchronization signals of the electronic device 101 and/or the external electronic device.

**[Table 1]**

| field | size (bits) | explanation | example value |
|---|---|---|---|
| OUI (organizationally unique identifier) | 8 | Vendor specific OUI type | - |
| length | 8 | length of corresponding data | 0x00 ~ 0xFF |
| type | 2 | type of power-saving mode data and message | 00: Request |
| | | | 01: Request (Response not required) |
| | | | 10: Response |
| | | | 11: Confirm |
| enter power-saving | 2 | enter and terminate power-saving mode | 00: No |
| | | | 01: Enter |
| | | | 10: Terminate |
| | | | 11: Reserved |
| discovery window interval in power-saving mode | 5 | Discovery Window Interval | 0b00000: Do not wake up at DW |
| | | | 0b00001: 1 DWST (512 TUs) |
| | | | 0b00010: 2 DWST (1,024 TUs) |
| | | | 0b00011: 3 DWST (2,048 TUs) |
| | | | ... |
| | | | 0b10000: 16 DWST (8,192 Tus), Default |
| | | | 0b10001 ~ 0b11111: Reserved |
| synchronization beacon period in power-saving mode | 14 | Synchronization beacon interval | 0b00000000000000: Do not send Synchronization beacon Other: Send Synchronization beacon in unit of TU (0b00000000000001 ~ 0b11111111111111) |
| | | | (Default is 100 TU = 102.4 ms) |
| configure NAN role in power-saving mode | 4 | NAN role configuration | 0000: All devices becomes Non-master Non-Sync |
| | | | 0001: Publisher becomes NAN Master |
| | | | 0010: Subscriber becomes NAN Master |
| | | | 0011: Publisher becomes power-save Master (power-save Master is NAN Master but not it does not perform legacy Master, where it transmit synchronization beacon less frequently) |
| | | | 0100: Subscriber becomes power-save Master |
| | | | 0101 ~ 1111: Reserved |
| NAN Master NMI | 48 | NMI of device to operate as master in power-saving mode | If NAN role configuration is set to 0000, 0101 ~ 1111, Don't care. |
| | | | 0x000000000000 ~ 0xFFFFFFFFFFFF |

For example, the control information related to switching to the low-power mode may include information related to second scheduling for maintaining synchronization between the electronic device 101 and the external electronic device, based on time information of the AP as shown in [Table 2].

**[Table 2]**

| field | size (bits) | explanation | example value |
|---|---|---|---|
| OUI (organizationally unique identifier) | 8 | Vendor specific OUI type | - |
| length | 8 | length of corresponding data | 0x00 ~ 0xFF |
| type | 2 | type of time reference change data message | 00: Request |
| | | | 01: Request (Response not required) |
| | | | 10: Response |
| | | | 11: Confirm |
| synchronization reference entity | 3 | synchronizati on reference entity | 000: originally used NAN time function |
| | | | 001: another found NAN time function |
| | | | 010: Connected Access Point (AP) |
| | | | 011: Other proxy (Beaconing device) |
| | | | 100 ~ 111: Reserved |
| save power | 1 | enter power-saving mode | 0: No |
| | | | 1: Enter |
| discard currently operating NAN | 2 | Discard current NAN cluster | 00: Maintain current NAN Cluster address (BSSID) |
| | | | 01: Discard current NAN cluster address and merge into another NAN or AP/Proxy information (TSF, BSSID) |
| | | | 10: Discard current NAN cluster address and turn off NAN interface |
| | | | 11: Reserved |
| BSSID of time reference entity | 48 | Target BSSID (or NAN Cluster ID) | 00:00:00:00:00:00 ~ FF:FF:FF:FF:FF:FF |
| time function or offset to be referred to | 64 | TSF or TSF offset | 0 ~ FFFFFFFFFFFFFFFF |
| type of time function field | 1 | Is TSF field TSF or offset | 0: TSF |
| | | | 1: TSF offset |
| return option | 1 | return option when time reference ends | 0: Use current BSSID and TSF for restoring NAN cluster |
| | | | 1: Restore NAN cluster with past NAN information |
| beacon period of new time reference entity | 14 | Beacon interval of Target BSSID AP or proxy | 0 ~ 0b11111111111111 (Default is 100 TU ~ 102.4 ms) |
| period of receiving beacon of new time reference entity | 4 | beacon reception period | 1: Listen AP beacon Every 100 TU (Default) |
| | | | 100 (=4): Listen AP Beacon every 4*100 TU |

For example, the scheduling change information may include information related to removal of each of at least one lower scheduling related to data communication using the NDP included in the first scheduling information as shown in [Table 3].

**[Table 3]**

| field | size (bits) | explanation | example value | |
|---|---|---|---|---|
| OUI (organizationally unique identifier) | 8 | Vendor specific OUI type | - | |
| length | | 8 | length of corresponding data | 0x00 ~ 0xFF |
| type | | 2 | type of scheduling command | 00: Request |
| | | | | 01: Request (Response not required) |
| | | | | 10: Response |
| | | | | 11: Confirm |
| detailed type | | 3 | detailed type of scheduling command | 000: Add schedule |
| | | | | 001: Remove schedule |
| | | | | 010: Overwrite schedule |
| | | | | 011: Reset schedule |
| | | | | 100: Not change schedule |
| | | | | 101 ~111: Reserved |
| type of included schedule | | 2 | distinguish type of identifier-based scheduling or ratio-based scheduling | 00: Schedule ID based scheduling (identifier) |
| | | | | 01: Schedule Ratio based scheduling (ratio) |
| | | | | 10 ~ 11: Reserved |
| frequency band | | 4 | refers to frequency band indicated by schedule | 0000: Various Band Indication |
| | | | | 0001: Sub-1 GHz |
| | | | | 0010: 2.4 GHz |
| | | | | 0011: 5 GHz |
| | | | | 0100: 6 GHz |
| | | | | 0101: 60 GHz |
| | | | | 0110 ~ 1111: Reserved |
| channel | 2.4 GHz | 4 | refers to channel indicated by schedule | 0d01 ~ 0d14: 2.4 GHz channel number |
| | | | | 0d00, 0d15: Not used |
| | 5 GHz | 8 | | 0d001 ~ 0d196: 5 GHz channel number |
| | | | | 0d000, 0d197~0d255: Not used |
| | 6 GHz | 8 | | 0d001 ~ 0d233: 6 GHz channel number |
| | | | | 0d000, 0d234~255: Not used |
| ratio-based scheduling | ratio | 4 | Specify ratio from 0 to 10 among 10 (i.e., 0, 0.1, 0.2, ... 1) | 0d00 ~ 0d15: Ratio of active period |
| | | | | Note that 0d00 means 1, and 0d15 means 16 among total 16 slots |
| | existence or nonexistence of AP connection | 1 | Bitset 1 if AP is connected If AP connected, the scheduling ratio should consider AP time allocation | 0: Not connected |
| identifier-based scheduling | | | | 1: connected |
| | identifier type | 16 | Specify category of the corresponding schedule ID | Bit 0: General |
| | | | | Bit 1: DW |
| | | | | Bit 2: Unsynchronized Service Discovery |
| | | | | Bit 3: NDP |
| | | | | Bit 4: AP |
| | | | | Bit 5: Samsung Fast Connect |
| | | | | Bit 6: Additional NDP Bit 7: Passive scan |
| | | | | Bit 8~16: Reserved |
| | number of identifiers | 8 | The number of Scheduling ID entry | 0x00~0xFF |
| | identifier | Var. | Specify schedule ID, which defines different time and band bitmap, Each ID is correspondent with each bitmap | |

For example, the control information related to switching to the low-power mode and/or the scheduling change information may be transmitted based on service descriptor attribute (SDA), service descriptor extension attribute (SDEA), vendor specific information element (VISE), vendor specific attribute (VSA), or out of band (OOB) communication.

For example, when configured as a master device for synchronization with the external electronic device, the processor 500 may control the communication circuit 510 to transmit a beacon through a predetermined transmission interval configured based on second scheduling information for synchronization with the external electronic device. For example, the electronic device 101 may operate in a communication state (for example, wakeup state) during the predetermined transmission interval and operate in a communication idle state during the remaining intervals except for the predetermined transmission interval. For example, the predetermined transmission interval may indicate a time interval configured based on the second scheduling information for maintaining synchronization between the electronic device 101 operating in the low-power mode and the external electronic device. For example, the size of the predetermined transmission interval may correspond to a discovery window for NAN communication, and the period of the predetermined transmission interval may be configured as an integer multiple of the period of the discovery window. For example, when the electronic device 101 is configured as a master device for synchronization with the external electronic device in the low-power mode, transmission of a discovery beacon through the discovery window may be limited.

For example, when not configured as the master device for synchronization with the external electronic device, the processor 500 may maintain synchronization with the external electronic device, based on the synchronization beacon received from the external electronic device during the predetermined transmission interval configured based on the second scheduling information.

For example, when accessing the same access point (AP) as that of the external electronic device, based on AP time information (for example, a time synchronization function (TSF)) received from the AP, the processor 500 may maintain synchronization with the external electronic device during the predetermined transmission interval configured based on the second scheduling information.

For example, the processor 500 may identify whether the NDP connection with the external electronic device is valid based on a frame received from the external electronic device through a predetermined active interval. When determining that the NDP connection with the external electronic device is valid, the processor 500 may maintain synchronization with the external electronic device. For example, the frame received from the external electronic device may include a synchronization beacon, an SDF, an NAF, or a frame defined in the WLAN. For example, the frame received from the external electronic device may be defined based on a VISE.

According to an embodiment, the electronic device (for example, the electronic device 101) or the processor (for example, the processor 120 or 500) may determine whether to perform data communication with the external electronic device having the maintained NDP connection in operation 709. For example, when an event related to release of the low-power mode is generated, the processor 500 may determine to perform data communication with the external electronic device 900. For example, the event related to release of the low-power mode may be generated based on at least one of execution of a function or application program related to data transmission, an input of a control signal related to data transmission, or reception of a user input related to data transmission.

According to an embodiment, when determining not to perform data communication with the external electronic device having the maintained NDP connection (for example, "No" of operation 709), the electronic device (for example, the electronic device 101) or the processor (for example, the processor 120 or 500) may end an embodiment for data communication with the external electronic device. For example, when determining not to perform data communication with the external electronic device having the maintained NDP connection, the processor 500 may continuously maintain synchronization with the external electronic device, based on second scheduling information.

According to an embodiment, when determining to perform data communication with the external electronic device having the maintained NDP connection ("Yes" of operation 709), the electronic device (for example, the electronic device 101) or the processor (for example, the processor 120or 500) may perform data communication with the external electronic device, based on NDP-related information in operation 711. For example, when an event related to release of the low-power mode is generated in the state where the NDP connection with the external electronic device 600 operates in the low-power mode, the processor 500 may identify whether first scheduling information can be supported. For example, the state where the NDP connection operates in the low-power mode may include a state where information related to the NDP with the external electronic device is stored and synchronization with the external electronic device is maintained based on second scheduling information.

For example, when determining that the first scheduling information can be supported, the processor 500 may control the communication circuit 510 to transmit control information related to release of the low-power mode to the external electronic device. For example, the processor 500 may control the communication circuit 510 to transmit information related to addition of at least one lower scheduling included in the first scheduling information to the external electronic device. For example, the processor 500 may control the communication circuit 510 to perform data communication through the NDP with the external electronic device, based on first scheduling information transmitted to the external electronic device, based on the control information related to release of the low-power mode.

For example, when determining that the first scheduling information cannot be supported, the processor 500 may control the communication circuit 500 to transmit information related to third scheduling for data communication with the external electronic device and control information related to release of the low-power mode to the external electronic device. For example, the processor 500 may control the communication circuit 510 to perform data communication through the NDP with the external electronic device, based on third scheduling information transmitted to the external electronic device, based on the control information related to release of the low-power mode. For example, data communication based on the third scheduling information may be performed when the electronic device 101 receives information related to "accept" of the third scheduling information from the external electronic device. For example, the information related to third scheduling may include information related to addition of lower scheduling supported by the electronic device 101 and information related to removal of lower scheduling that is not supported by the electronic device 101 among at least one lower scheduling included in the first scheduling information. For example, the information related to third scheduling may include information related to addition of new lower scheduling that is not included in the first scheduling information.

For example, when receiving information related to fourth scheduling from the external electronic device, the processor 500 may identify whether the fourth scheduling information can be supported. When determining to support the fourth scheduling information, the processor 500 may control the communication circuit 510 to perform data communication through the NDP with the external electronic device, based on the fourth scheduling information. For example, when determining to support the fourth scheduling information, the processor 500 may control the communication circuit 510 to transmit information related to "accept" of the fourth scheduling information to the external electronic device. For example, the fourth scheduling information may be received from the external electronic device through information related to "counter" of the third scheduling information.

For example, when determining that the fourth scheduling information cannot be supported, the processor 500 may control the communication circuit 510 to transmit information related to fifth scheduling generated based on the first scheduling information and the fourth scheduling information to the external electronic device. The processor 500 may control the communication circuit 510 to perform data communication through the NDP with the external electronic device, based on the fifth scheduling information. For example, data communication based on the fifth scheduling information may be performed when the electronic device 101 receives information related to "accept" of the fifth scheduling information from the external electronic device. For example, the data communication based on the fifth scheduling information may be performed without a response signal (for example, the information related to "accept") to the external electronic device since the fifth scheduling information includes information related to lower scheduling supported by the electronic device 101 among at least one lower scheduling included in the fourth scheduling information.

According to an embodiment, when the low-power mode is released, the electronic device 101 may configure scheduling for data communication through negotiation based on the first scheduling information with the external electronic device.

According to an embodiment, the electronic device 101 and the external electronic device maintaining synchronization in the low-power mode may omit a procedure of exchanging an SDF related to an NDF configuration, a procedure of configuring a data path, an authentication procedure, and/or a procedure of configuring security and perform data communication, based on information related to the stored NDP for switching to the low-power mode.

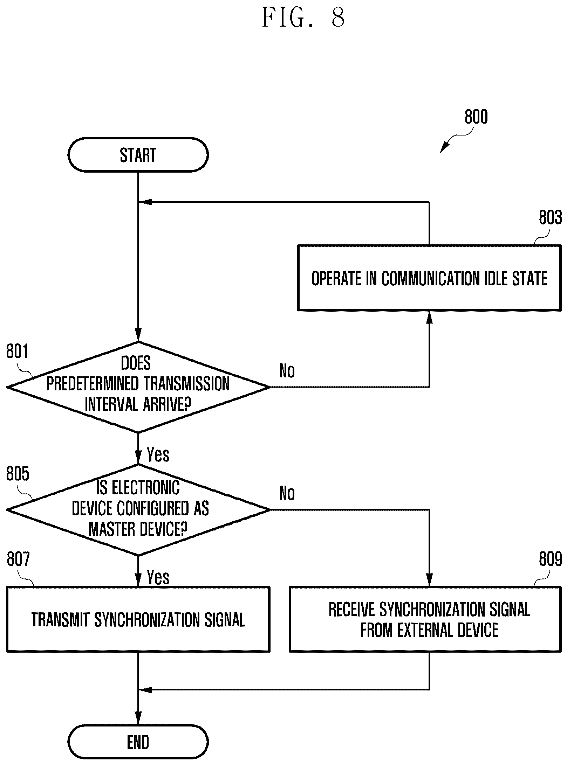

FIG. 8 is a flowchart 800 illustrating synchronization between an electronic device and an external electronic device according to an embodiment. According to an embodiment, at least some of FIG. 8 may be detailed operations of operation 707 of FIG. 7. In the following embodiments, respective operations may be sequentially performed but the sequential performance is not necessary. For example, orders of the operations may be changed, and at least two operations may be performed in parallel. For example, the electronic device of FIG. 8 may be the electronic device 101 of FIG. 1, 2, 3, 4, 5, or 6.

According to an embodiment referring to FIG. 8, when determining to switch to the low-power mode (for example, "Yes" of operation 7), an electronic device (for example, the electronic device 101 of FIG. 1, 2, 3, 4, 5, or 6) or a processor (for example, the processor 120 of FIG. 1 or the processor 500 of FIG. 5) may identify whether a predetermined transmission interval configured based on second scheduling information arrives in operation 801. For example, the predetermined transmission interval may indicate a time interval configured based on the second scheduling information for maintaining synchronization between the electronic device 101 operating in the low-power mode and the external electronic device. For example, the size of the predetermined transmission interval may correspond to a discovery window for NAN communication. For example, the period of the predetermined transmission interval is a configuration value of the "synchronization beacon period in the power-saving mode" in [Table 1] and may be configured as an integer multiple of the period of the discovery window.

According to an embodiment, when the predetermined transmission interval does not arrive (for example, "No" of operation 801), the electronic device (for example, the electronic device 101) or the processor (for example, the processor 120 or 500) may operate in a communication idle state in operation 803. For example, the communication idle state may include a sleep state in which NAN communication is limited.

According to an embodiment, when the predetermined transmission interval arrives (for example, "Yes" of operation 801), the electronic device (for example, the electronic device 101) or the processor (for example, the processor 120 or 500) may identify whether the electronic device 101 is configured as a master device in operation 805.

According to an embodiment, when the electronic device is configured as the master device (for example, "Yes" of operation 805), the electronic device (for example, the electronic device 101) or the processor (for example, the processor 120 or 500) may transmit a synchronization signal (for example, a synchronization beacon) during the predetermined transmission interval in operation 807. For example, when the predetermined transmission interval arrives, the processor 500 may control the communication circuit 510 to switch to the communication state. The processor 500 may transmit the synchronization signal through the communication circuit 510 having switched to the active state. For example, when the electronic device 101 operates in the low-power mode, the processor 500 may control the communication circuit 510 to limit transmission of a discovery beacon through the discovery window even when the electronic device is configured as the master device for synchronization with the external electronic device.

According to an embodiment, when the electronic device is not configured as the master device (for example, "No" of operation 805), the electronic device (for example, the electronic device 101) or the processor (for example, the processor 120 or 500) may maintain synchronization with the external electronic device, based on the synchronization signal (for example, synchronization beacon) received from the external electronic device during the predetermined transmission interval in operation 809. For example, when the predetermined transmission interval arrives, the processor 500 may control the communication circuit 510 to switch to the communication state. The processor 500 may acquire time information (for example, TSF) of the external electronic device from the synchronization signal received from the external electronic device through the communication circuit 510 having switched to the active state. The processor 500 may synchronize time information of the electronic device 101 with the external electronic device, based on the time information of the external electronic device.

According to an embodiment, when the electronic device 101 operates in the low-power mode with the external electronic device 600, the electronic device may identify whether the NDP connection with the external electronic device is valid based on a frame received from the external electronic device 600 through a predetermined active interval. For example, the frame received from the external electronic device may include a synchronization beacon, an SDF, an NAF, or a frame defined in the WLAN. For example, the frame received from the external electronic device may be defined based on a VISE. For example, when determining that the NDP connection with the external electronic device 600 is valid, the electronic device 101 may maintain synchronization with the external electronic device 600. For example, when determining that the NDP connection with the external electronic device 600 is not valid, the electronic device 101 may release the NDP connection with the external electronic device 600. The electronic device 101 may discard information (for example, first scheduling information and second scheduling information) related to the NDP with the external electronic device 600, based on release of the NDP connection with the external electronic device 600 and limit performance of the synchronization procedure with the external electronic device 600.

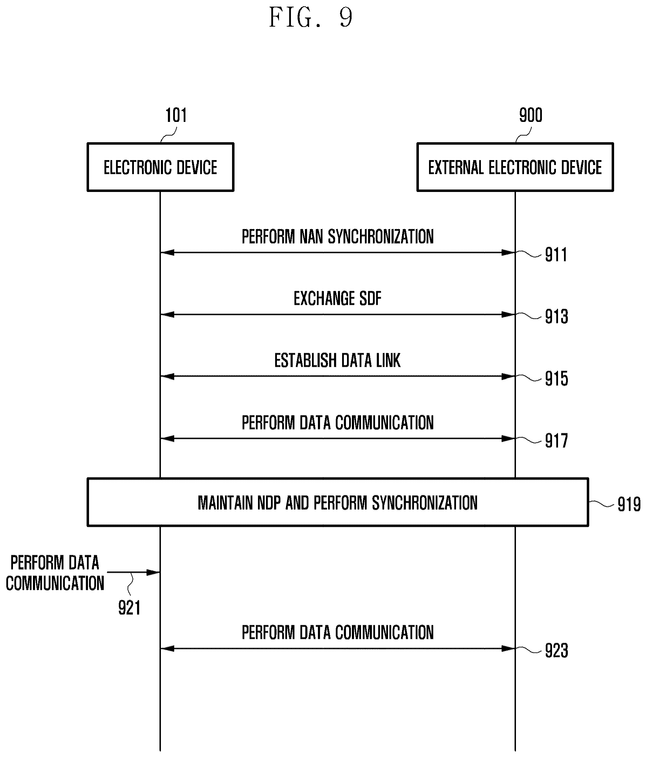

FIG. 9 illustrates an example in which an electronic device maintains synchronization with an external electronic device according to an embodiment.

According to an embodiment referring to FIG. 9, the electronic device 101 and an external electronic device 900 (for example, the external electronic device 210, 220, or 230 of FIG. 2) may perform NAN cluster synchronization in operation 911. For example, the electronic device 101 and the external electronic device 900 may perform synchronization with an NAN cluster, based on NAN cluster information included in signals broadcasted by electronic devices (for example, the electronic devices 101, 210, 220, and/or 230 of FIG. 2) included in a cluster (or network) (for example, the cluster 200 of FIG. 2) implemented in an NAN scheme.

According to an embodiment, the electronic device 101 may search for the external electronic device 900 for data transmission through SDF exchange within a discovery window synchronized with at least one external electronic device included in the NAN cluster, based on NAN cluster synchronization in operation 913.

According to an embodiment, the electronic device 101 and the external electronic device 900 may establish a data link for data communication in operation 915. For example, the electronic device 101 may establish a data link with the external electronic device 900, based on first scheduling information for data communication with the external electronic device 900. For example, the first scheduling information may include at least one piece of lower scheduling information corresponding to each of at least one additional available window for data communication between the electronic device 101 and the external electronic device 900. For example, the electronic device 101 and the external electronic device 900 may perform an authentication procedure for data communication and a security configuration procedure.

According to an embodiment, the electronic device 101 and the external electronic device 900 may perform data communication through the NDP configured based on the first scheduling information in operation 917.

According to an embodiment, the electronic device 101 may perform synchronization with the external electronic device 900 to maintain the NDP with the external electronic device 900, based on the generation of an event related to switching to the low-power mode in operation 919. For example, the electronic device 101 and the external electronic device 900 may store information related to the NDP established with the external electronic device 900, based on the generation of the event related to switching to the low-power mode.

For example, the electronic device 101 and the external electronic device 900 may maintain synchronization, based on second scheduling information different from the first scheduling information, based on the generation of the event related to switching to the low-power mode.

For example, when configured as a master device for synchronization with the external electronic device 900, the electronic device 101 may transmit a synchronization beacon through a predetermined transmission interval configured based on the second scheduling information for synchronization with the external electronic device 900. For example, the predetermined transmission interval may indicate a time interval configured based on the second scheduling information included in [Table 1] to maintain synchronization between the electronic device 101 operating in the low-power mode and the external electronic device. For example, the size of the predetermined transmission interval may correspond to a discovery window for NAN communication. For example, the period of the predetermined transmission interval is a configuration value of the "synchronization beacon period in the power-saving mode" in [Table 1] and may be configured as an integer multiple of the period of the discovery window.

For example, the external electronic device 900 may maintain synchronization with the electronic device 101, based on a synchronization beacon received from the electronic device 101 during the predetermined transmission interval configured based on the second scheduling information. For example, the electronic device 101 and the external electronic device 900 may operation in a communication state (for example, wakeup state) during the predetermined transmission interval and operate in a communication idle state during the remaining intervals except for the predetermined transmission interval.

According to an embodiment, the electronic device 101 may determine whether to perform data communication with the external electronic device 900 having the maintained NDP connection in operation 921. For example, when an event related to release of the low-power mode is generated, the electronic device 101 may determine to perform data communication with the external electronic device 900. For example, the event related to release of the low-power mode may be generated based on at least one of execution of a function or application program related to data transmission, an input of a control signal related to data transmission, or reception of a user input related to data transmission.

According to an embodiment, when determining to perform data communication with the external electronic device 900 having the maintained NDP connection in operation 921, the electronic device 101 may perform data communication with the external electronic device 900, based on information related to the NDP with the external electronic device 900 in operation 923.

For example, when the event related to release of the low-power mode is generated in the state where the NDP connection with the external electronic device 900 operates in the low-power mode, the electronic device 101 may identify whether first scheduling information can be supported. For example, the state where the NDP connection operates in the low-power mode may include a state where information related to the NDP with the external electronic device 900 is stored and synchronization with the external electronic device 900 is maintained based on second scheduling information in operation 919.

For example, when determining that the first scheduling information can be supported, the electronic device 101 may transmit control information related to release of the low-power mode to the external electronic device 900. For example, the control information related to release of the low-power mode may be transmitted to the external electronic device 900 together with information related to additional of at least one lower scheduling included in the first scheduling information.

For example, when determining that the first scheduling information cannot be supported, the electronic device 101 may transmit information related to third scheduling for data communication with the external electronic device 900 and control information related to release of the low-power mode to the external electronic device 900. For example, the information related to third scheduling may include information related to addition of lower scheduling supported by the electronic device 101 and information related to removal of lower scheduling that is not supported by the electronic device 101 among at least one lower scheduling included in the first scheduling information. For example, the information related to third scheduling may include information related to addition of new lower scheduling that is not included in the first scheduling information.

For example, the electronic device 101 may perform data communication through the NDP with the external electronic device 900, based on the first scheduling information or the third scheduling information.

For example, when receiving information related to fourth scheduling from the external electronic device 900, the electronic device 101 may identify whether the fourth scheduling can be supported. When determining to support the fourth scheduling, the electronic device 101 may perform data communication through the NDP with the external electronic device 900, based on the fourth scheduling information.

According to an embodiment, the information related to the NDP may be stored at a time point at which the electronic device 101 and the external electronic device 600 determine that the event related to switching to the low-power mode is generated or a time point at which it is determined that the NDP configuration between the electronic device 101 and the external electronic device 600 is completed.

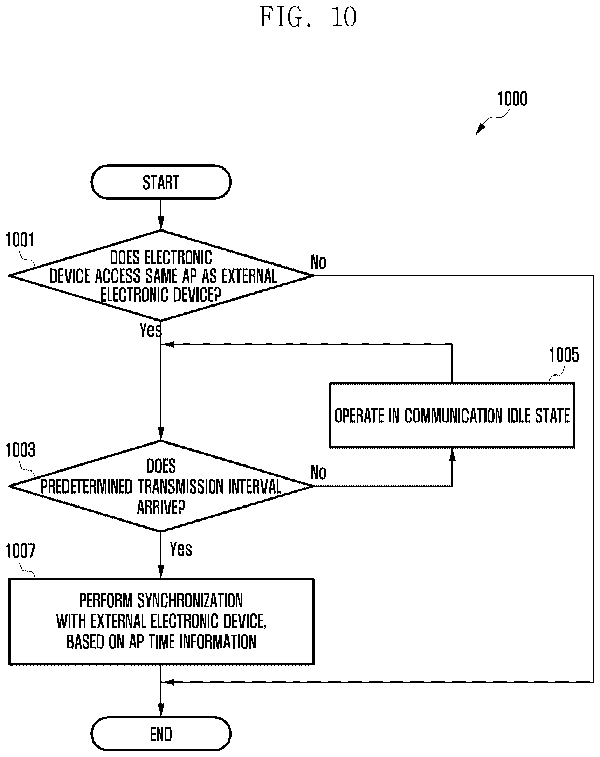

FIG. 10 is a flowchart 1000 illustrating synchronization between an electronic device and an external electronic device according to an embodiment. According to an embodiment, at least some of FIG. 10 may be a detailed operation of operation 707 of FIG. 7. In the following embodiments, respective operations may be sequentially performed but the sequential performance is not necessary. For example, orders of the operations may be changed, and at least two operations may be performed in parallel. For example, the electronic device of FIG. 10 may be the electronic device 101 of FIG. 1, 2, 3, 4, 5, or 6.

According to an embodiment referring to FIG. 10, when determining to switch to a low-power mode (for example, "Yes" of operation 703 in FIG. 7), an electronic device (for example, the electronic device 101 of FIG. 1, 2, 3, 4, 5, or 6) or a processor (for example, the processor 120 of FIG. 1 or the processor 500 of FIG. 5) may identify whether the electronic device 101 and the external electronic device access the same AP in operation 1001. For example, the processor 500 may identify whether the electronic device 101 and the external electronic device access the same AP, based on at least one of OOB communication, a 3-layer search related to universal plug and play (uPnP), a WLAN search (for example, Wi-Fi direct or NAN communication), or a cloud scheme.

According to an embodiment, when not accessing the same AP (for example, "No" of operation 1001), the electronic device (for example, the electronic device 101) or the processor (for example, the processor 120 or 500) may end an embodiment for synchronization with the external electronic device, based on the AP. For example, when the electronic device 101 does not access the same AP as that of the external electronic device, the electronic device may maintain synchronization with the external electronic device, based on synchronization beacons of the electronic device 101 and/or the external electronic device like in operations 801 to 809 of FIG. 8.

According to an embodiment, when the electronic device 100 and the external electronic device access the same AP (for example, "Yes" of operation 1001), the electronic device (for example, the electronic device 101) or the processor (for example, the processor 120 or 500) may identify whether a predetermined transmission interval configured based on second scheduling information arrives in operation 1003. For example, the predetermined transmission interval may indicate a time interval configured based on the second scheduling information for maintaining synchronization between the electronic device 101 operating in the low-power mode and the external electronic device. For example, the size of the predetermined transmission interval may correspond to a discovery window for NAN communication. For example, the period of the predetermined transmission interval is a configuration value of the "synchronization beacon period in the power-saving mode" in [Table 1] and may be configured as an integer multiple of the period of the discovery window.

According to an embodiment, when the predetermined transmission interval does not arrive (for example, "No" of operation 1003), the electronic device (for example, the electronic device 101) or the processor (for example, the processor 120 or 500) may operate in a communication idle state in operation 1005. For example, the communication idle state may include a sleep state in which NAN communication is limited.

According to an embodiment, when the predetermined transmission interval arrives (for example, "Yes" of operation 1003), the electronic device (for example, the electronic device 101) or the processor (for example, the processor 120 or 500) may maintain synchronization with the external electronic device, based on AP time information received from the AP during the predetermined transmission interval in operation 1007. For example, when the predetermined transmission interval arrives, the processor 500 may control the communication circuit 510 to switch to the communication state. The processor 500 may maintain synchronization with the external electronic device, based on a configuration value of the "time function or offset to be referred to" in [Table 2] and AP time information, during the predetermined transmission interval. For example, the AP time information (for example, TSF) may be acquired from the AP through a predetermined separate reception interval configured independently from the predetermined transmission interval.

According to an embodiment, when the electronic device 101 and the external electronic device 600 are connected to the same group owner (GO) through WLAN-based direct communication (for example, Wi-Fi direct), the electronic device 101 and the external electronic device 600 may maintain synchronization, based on GO time information received from the GO during a predetermined transmission interval. For example, the GO is a node that controls WLAN-based direct communication and may include a device different from the electronic device 101 and the external electronic device connected through WLAN-based direct communication.

According to an embodiment, when the electronic device 101 operates in the low-power mode with the external electronic device 600, the electronic device may identify whether the NDP connection with the external electronic device is valid based on a frame received from the external electronic device 600 through a predetermined active interval. For example, when determining that the NDP connection with the external electronic device 600 is valid, the electronic device 101 may maintain synchronization with the external electronic device 600, based on AP time information. For example, when determining that the NDP connection with the external electronic device 600 is not valid, the electronic device 101 may release the NDP connection with the external electronic device 600. The electronic device 101 may discard information related to the NDP with the external electronic device 600, based on release of the NDP connection with the external electronic device 600, and limit the performance of a synchronization procedure with the external electronic device 600. For example, a predetermined active interval may indicate a time interval configured, based on second scheduling information to identify whether the NDP connection between the electronic device 101 operating in the low-power mode and the external electronic device is valid.

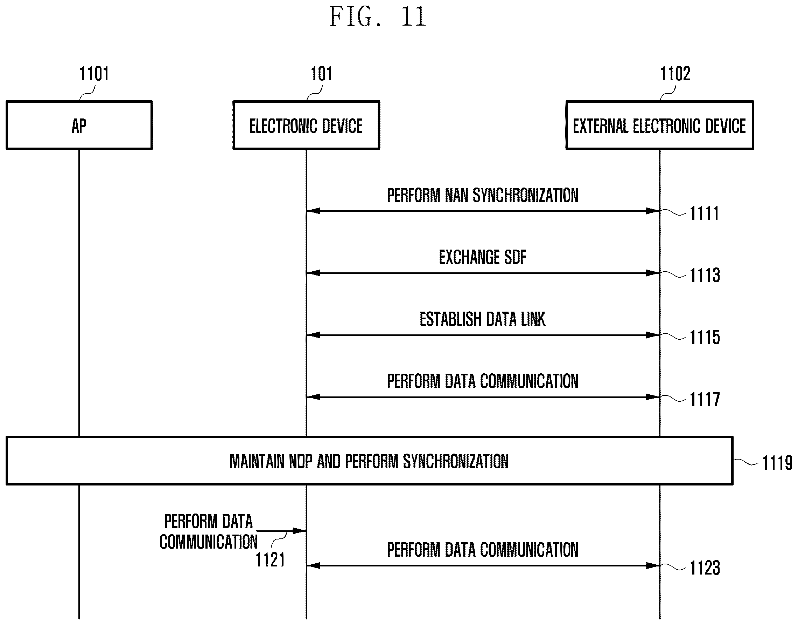

FIG. 11 illustrates an example in which an electronic device maintains synchronization with an external electronic device according to an embodiment.

According to an embodiment referring to FIG. 11, the electronic device 101 and an external electronic device 1102 (for example, the external electronic device 210, 220, or 230 of FIG. 2) may perform NAN cluster synchronization in operation 1111. For example, the electronic device 101 and the external electronic device 1102 may perform synchronization with an NAN cluster, based on NAN cluster information included in signals broadcasted by electronic devices (for example, the electronic devices 101, 210, 220, and/or 230 of FIG. 2) included in a cluster (or network) (for example, the cluster 200 of FIG. 2) implemented in an NAN scheme.

According to an embodiment, the electronic device 101 may search for the external electronic device 1102 for data transmission through SDF exchange within a discovery window synchronized with at least one external electronic device included in the NAN cluster, based on NAN cluster synchronization in operation 1113.

According to an embodiment, the electronic device 101 and the external electronic device 1102 may establish a data link for data communication in operation 1115. For example, the electronic device 101 may establish a data link with the external electronic device 1102, based on first scheduling information for data communication with the external electronic device 1102. For example, the first scheduling information may include at least one piece of lower scheduling information corresponding to each of at least one additional available window for data communication between the electronic device 101 and the external electronic device 1102. According to an embodiment, the electronic device 101 and the external electronic device 1102 may perform an authentication procedure and a security configuration procedure for data communication.

According to an embodiment, the electronic device 101 and the external electronic device 1102 may perform data communication through the NDP configured based on the first scheduling information in operation 1117.

According to an embodiment, the electronic device 101 may perform synchronization with the external electronic device 1102 to maintain the NDP with the external electronic device 1102, based on the generation of an event related to switching to the low-power mode in operation 1119. For example, the electronic device 101 and the external electronic device 1102 may store information related to the NDP established with the external electronic device 1102, based on the generation of the event related to switching to the low-power mode. For example, the electronic device 101 and the external electronic device 1102 may maintain synchronization, based on second scheduling information different from the first scheduling information, based on the generation of the event related to switching to the low-power mode.

For example, when the electronic device 101 is connected to the same AP as that of the external electronic device 1102, the electronic device may acquire time information of an AP 1100 from the AP 1100 through a predetermined transmission interval configured based on second scheduling information for synchronization with the external electronic device 1102. Time synchronization with the external electronic device may be maintained based on time information (for example, TSF) of the AP 1100 of the electronic device 101 and offset information included in the second scheduling information. For example, the predetermined transmission interval may indicate a time interval configured based on the second scheduling information for maintaining synchronization between the electronic device 101 operating in the low-power mode and the external electronic device. For example, the size of the predetermined transmission interval may correspond to a discovery window for NAN communication. For example, the period of the predetermined transmission interval is a configuration value of a "beacon period of a new time reference entity" in [Table 2] and may be configured as an integer multiple of the period of the discovery window.

According to an embodiment, the electronic device 101 may determine whether to perform data communication with the external electronic device 1102 having the maintained NDP connection in operation 1121. For example, when an event related to release of the low-power mode is generated, the electronic device 101 may determine to perform data communication with the external electronic device 1102. For example, the event related to release of the low-power mode may be generated based on at least one of execution of a function or application program related to data transmission, an input of a control signal related to data transmission, or reception of a user input related to data transmission.

According to an embodiment, when determining to perform data communication with the external electronic device 1102 having the maintained NDP connection in operation 1121, the electronic device 101 may perform data communication with the external electronic device 1102, based on information related to the NDP with the external electronic device 1102 in operation 1123. For example, when the event related to release of the low-power mode is generated in the state where the NDP connection with the external electronic device 1102 operates in the low-power mode, the electronic device 101 may identify whether first scheduling information can be supported. For example, the state where the NDP connection operates in the low-power mode may include a state (operation 1119) where information related to the NDP (for example, first scheduling information) with the external electronic device 1102 is stored and synchronization with the external electronic device 1102 is maintained based on second scheduling information.

For example, when determining that the first scheduling information can be supported, the electronic device 101 may transmit control information related to release of the low-power mode to the external electronic device 1102. For example, the control information related to release of the low-power mode may be transmitted to the external electronic device 1102 together with information related to additional of at least one lower scheduling included in the first scheduling information. For example, the electronic device 101 may perform data communication through the NDP with the external electronic device 1102, based on first scheduling information.

For example, when determining that the first scheduling information cannot be supported, the electronic device 101 may transmit information related to third scheduling for data communication with the external electronic device 1102 and control information related to release of the low-power mode to the external electronic device 1102. For example, the information related to third scheduling may include information related to addition of lower scheduling supported by the electronic device 101 and information related to removal of lower scheduling that is not supported by the electronic device 101 among at least one lower scheduling included in the first scheduling information. For example, the information related to third scheduling may include information related to addition of new lower scheduling that is not included in the first scheduling information. For example, the electronic device 101 may perform data communication through the NDP with the external electronic device 102, based on the third scheduling information.

For example, when receiving information related to fourth scheduling from the external electronic device 1102, the electronic device 101 may identify whether the fourth scheduling can be supported. When determining to support the fourth scheduling, the electronic device 101 may perform data communication through the NDP with the external electronic device 1102, based on the fourth scheduling information.

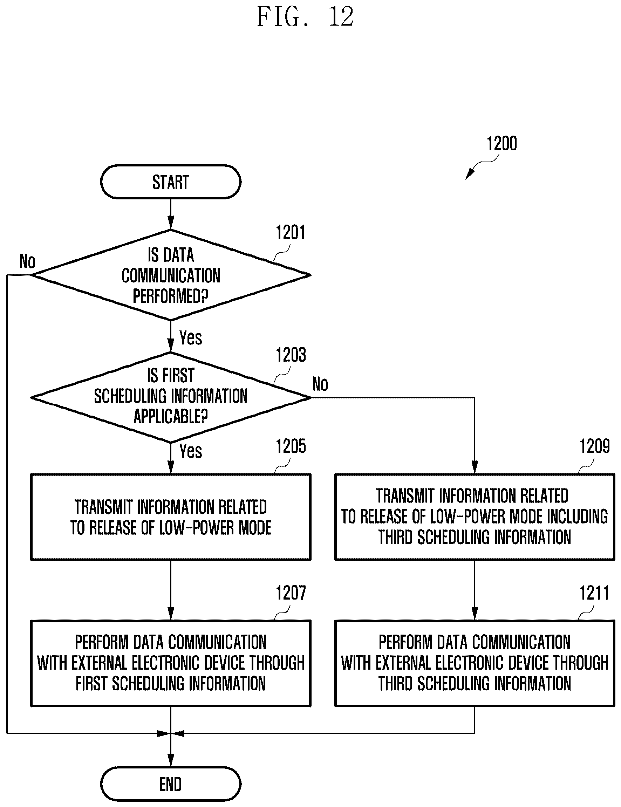

FIG. 12 is a flowchart 1200 in which the electronic device performs data communication with an external electronic device according to an embodiment. According to an embodiment, at least some of FIG. 12 may be a detailed operation of operation 711 of FIG. 7. In the following embodiments, respective operations may be sequentially performed but the sequential performance is not necessary. For example, orders of the operations may be changed, and at least two operations may be performed in parallel. For example, the electronic device of FIG. 12 may be the electronic device 101 of FIG. 1, 2, 3, 4, 5, or 6.

According to an embodiment referring to FIG. 12, when maintaining synchronization with an external electronic device having the maintained NDP connection (for example, operation 707 of FIG. 7), an electronic device (for example, the electronic device 101 of FIG. 1, 2, 3, 4, 5, or 6) or a processor (for example, the processor 120 of FIG. 1 or the processor 500 of FIG. 5) may determine whether to perform data communication with the external electronic device operating the low-power mode related to the NDP in operation 1201. For example, when an event related to release of the low-power mode is generated, the processor 500 may determine to perform data communication with the external electronic device 900. For example, the event related to release of the low-power mode may be generated based on at least one of execution of a function or application program related to data transmission, an input of a control signal related to data transmission, or reception of a user input related to data transmission.

According to an embodiment, when determining not to perform data communication with the external electronic device operating in the low-power mode related to the NDP (for example, "No" of operation 1201), the electronic device (for example, the electronic device 101) or the processor (for example, the processor 120 or 500) may end an embodiment for data communication with the external electronic device. For example, when determining not to perform data communication with the external electronic device having the maintained NDP connection, the processor 500 may continuously maintain synchronization with the external electronic device, based on second scheduling information.

According to an embodiment, when determining to perform data communication with the external electronic device operating in the low-power mode related to the NDP (for example, "Yes" of operation 1201), the electronic device (for example, the electronic device 101) or the processor (for example, the processor 120 or 500) may identify whether first scheduling information can be supported in operation 1203. For example, the processor 500 may identify whether at least one piece of lower scheduling information included in the first scheduling information can be supported.

According to an embodiment, when determining that the first scheduling information can be supported (for example, "Yes" of operation 1203), the electronic device (for example, the electronic device 101) or the processor (for example, the processor 120 or 500) may transmit control information related to release of the low-power mode to the external electronic device in operation 1205. For example, the control information related to release of the low-power mode may be transmitted during a predetermined transmission interval, based on the second scheduling information. For example, the control information related to release of the low-power mode may be transmitted through OOB communication. For example, the control information related to release of the low-power mode may include the information in [Table 1] or [Table 2], based on a synchronization scheme between the electronic device 101 and the external electronic device. For example, the control information related to release of the low-power mode may be transmitted to the external electronic device together with information related to addition of at least one lower scheduling included in the first scheduling information.

According to an embodiment, the electronic device (for example, the electronic device 101) or the processor (for example, the processor 120 or 500) may perform data communication through the NDP with the external electronic device, based on first scheduling information in operation 1207. For example, when receiving information related to "accept" of the first scheduling information from the external electronic device, the processor 500 may control the communication circuit 510 to perform data communication through the NDP with the external electronic device, based on the first scheduling information.

According to an embodiment, when determining that the first scheduling information cannot be supported (for example, "No" of operation 1203), the electronic device (for example, the electronic device 101) or the processor (for example, the processor 120 or 500) may transmit information related to third scheduling for data communication with the external electronic device and control information related to release of the low-power mode to the external electronic device in operation 1209. For example, the information related to third scheduling and the control information related to release of the low-power mode may be transmitted through a predetermined transmission interval, based on the second scheduling information. For example, the information related to third scheduling and the control information related to release of the low-power mode may be transmitted through OOB communication. For example, the information related to third scheduling may include information related to addition of lower scheduling supported by the electronic device 101 and information related to removal of lower scheduling that is not supported by the electronic device 101 among at least one lower scheduling included in the first scheduling information. For example, the information related to third scheduling may include information related to addition of new lower scheduling that is not included in the first scheduling information.

According to an embodiment, the electronic device (for example, the electronic device 101) or the processor (for example, the processor 120 or 500) may perform data communication through the NDP with the external electronic device, based on third scheduling information in operation 1211. For example, when receiving information related to "accept" of the third scheduling information from the external electronic device, the processor 500 may control the communication circuit 510 to perform data communication through the NDP with the external electronic device, based on the third scheduling information.

According to an embodiment, the electronic device 101 and the external electronic device maintaining synchronization in the low-power mode may omit a procedure of exchanging an SDF related to an NDF configuration, a procedure of configuring a data path, an authentication procedure, and/or a procedure of configuring security and perform data communication, based on information related to the stored NDP for switching to the low-power mode.

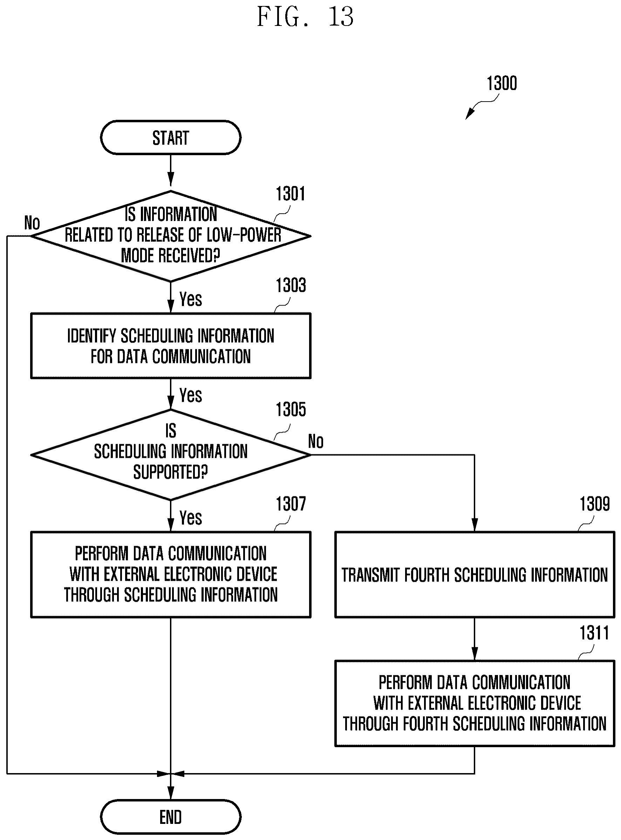

FIG. 13 is a flowchart 1300 in which an electronic device performs data communication with an external electronic device according to an embodiment. According to an embodiment, at least some of FIG. 13 may be a detailed operation of operation 711 of FIG. 7. In the following embodiments, respective operations may be sequentially performed but the sequential performance is not necessary. For example, orders of the operations may be changed, and at least two operations may be performed in parallel. For example, the electronic device of FIG. 13 may be the electronic device 101 of FIG. 1, 2, 3, 4, 5, or 6.

According to an embodiment referring to FIG. 13, when maintaining synchronization with an external electronic device having the maintained NDP connection (for example, operation 707 of FIG. 7), an electronic device (for example, the electronic device 101 of FIG. 1, 2, 3, 4, 5, or 6) or a processor (for example, the processor 120 of FIG. 1 or the processor 500 of FIG. 5) may identify whether information related to release of the low-power mode is received from an external electronic device operating in the low-power mode related to the NDP in operation 1301. For example, the information related to release of the low-power mode may be received during a predetermined transmission interval configured based on second scheduling information.

According to an embodiment, when not receiving the information related to release of the low-power mode (for example, "No" of operation 1301), the electronic device (for example, the electronic device 101) or the processor (for example, the processor 120 or 500) may end an embodiment for data communication with the external electronic device. For example, when not receiving the information related to release of the low-power mode from the external electronic device having the maintained NDP connection, the processor 500 may continuously maintain synchronization with the external electronic device, based on second scheduling information.

According to an embodiment, when receiving the information related to release of the low-power mode (for example, "Yes" of operation 1301), the electronic device (for example, the electronic device 101) or the processor (for example, the processor 120 or 500) may identify scheduling information for data communication with the external electronic device in operation 1303. For example, the scheduling information for data communication with the external electronic device may include first scheduling information stored when switching to the low-power mode is performed and third scheduling information newly configured by the external electronic device, based on release of the low-power mode.

According to an embodiment, the electronic device (for example, the electronic device 101) or the processor (for example, the processor 120 or 500) may identify whether scheduling information for data communication with the external electronic device received from the external electronic device can be supported in operation 1305. For example, the processor 500 may identify whether at least one piece of lower scheduling information included in the scheduling information (for example, the first scheduling information or the third scheduling information) for data communication with the external electronic device can be supported.

According to an embodiment, when determining that the scheduling information for data communication with the external electronic device can be supported (for example, "Yes" of operation 1305), the electronic device (for example, the electronic device 01) or the processor (for example, the processor 120 or 500) may perform data communication through the NDP with the external electronic device, based on scheduling information (for example, the first scheduling information or the third scheduling information) for data communication with the external electronic device in operation 1307. For example, when determining that the scheduling information for data communication with the external electronic device can be supported, the processor 500 may transmit information related to "accept" of the scheduling information to the external electronic device. The processor 500 may control the communication circuit 510 to perform data communication through the NDP with the external electronic device, based on the scheduling information for data communication with the external electronic device.

According to an embodiment, when determining that the scheduling information for data communication with the external electronic device cannot be supported (for example, "No" of operation 1305), the electronic device (for example, the electronic device 101) or the processor (for example, the processor 120 or 500) may transmit fourth scheduling information generated based on the scheduling information for data communication with the external electronic device to the external electronic device in operation 1309.

For example, when determining that the scheduling information for data communication with the external electronic device cannot be supported, the processor 500 may generate fourth scheduling information, based on the scheduling information for data communication with the external electronic device. The processor 500 may control the communication circuit 510 to transmit information related to "counter" including the fourth scheduling information to the external electronic device. For example, the fourth scheduling information may include information related to addition of lower scheduling supported by the electronic device 101 and information related to removal of lower scheduling that is not supported by the electronic device 101 among at least one lower scheduling included in the scheduling information received from the external electronic device. For example, the fourth scheduling information may include information related to addition to new lower scheduling that is not included in the scheduling information received from the external electronic device.

According to an embodiment, the electronic device (for example, the electronic device 101) or the processor (for example, the processor 120 or 500) may perform data communication through the NDP with the external electronic device, based on fourth scheduling information in operation 1311. For example, when receiving information related to "accept" of the fourth scheduling information from the external electronic device, the processor 500 may control the communication circuit 510 to perform data communication through the NDP with the external electronic device, based on the fourth scheduling information.

According to an embodiment, the electronic device 101 and the external electronic device maintaining synchronization in the low-power mode may omit a procedure of exchanging an SDF related to an NDF configuration, a procedure of configuring a data path, an authentication procedure, and/or a procedure of configuring security and perform data communication, based on information related to the stored NDP for switching to the low-power mode.

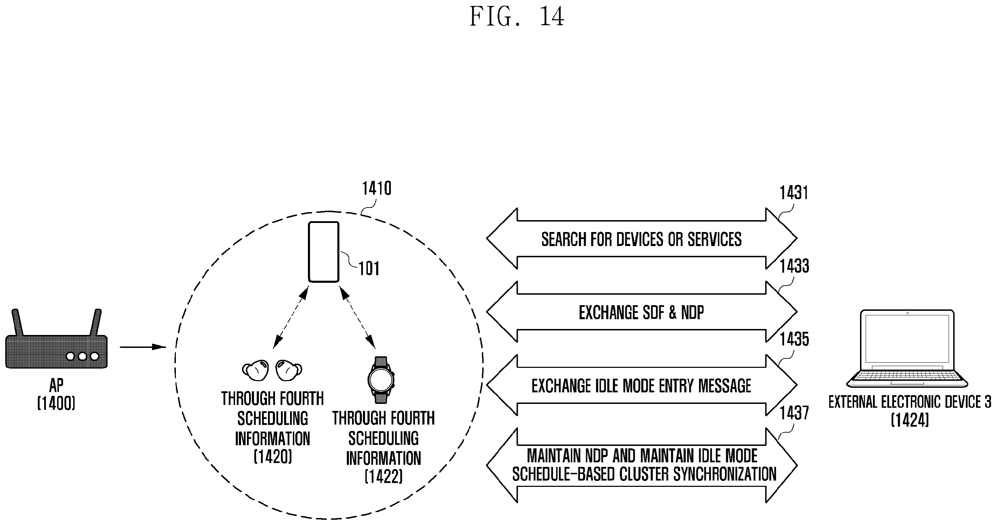

FIG. 14 illustrates an example in which an electronic device configures an NDP with a plurality of external electronic devices according to an embodiment.

According to an embodiment referring to FIG. 14, the electronic device 101 may perform NAN cluster synchronization with external electronic device 1 1420 and external electronic device 2 1422 included in an NAN cluster 1410 (for example, the NAN cluster 200 of FIG. 2).

According to an embodiment, the electronic device 101 may configure an NDP based on first scheduling information through SDP exchange with external electronic device 1 1420 and a data link configuration. The electronic device 101 may switch the NDP connection with external electronic device 1 1420 to a low-power mode, based on an event related to switching to the low-power mode. For example, the electronic device 101 may store information related to the NDP with external electronic device 1 1420. The electronic device 101 may maintain synchronization with external electronic device 1 1420, based on second scheduling information different from the first scheduling information.

According to an embodiment, the electronic device 101 may additionally configure the NDP with external electronic device 2 1422 in the state where the NDP connection with external electronic device 1 1420 is switched to the low-power mode. For example, when external electronic device 2 1422 for data communication is found in the state where the NDP connection with external electronic device 1 1420 is switched to the low-power mode, the electronic device 101 may configure the NDP based on sixth scheduling information through SDP exchange with external electronic device 2 1422 and the data link configuration. For example, the sixth scheduling information is dependent from the first scheduling information and may be the same as or different from the first scheduling information.

According to an embodiment, the electronic device 101 may switch the NDP connection with external electronic device 2 1422 to the low-power mode, based on the event related to switching to the low-power mode. For example, the electronic device 101 may store information related to the NDP with external electronic device 2 1422, based on switching to the low-power mode. The electronic device 101 may maintain synchronization with external electronic device 2 1422, based on seventh scheduling information different from the sixth scheduling information, based on switching to the low-power mode. For example, the seventh scheduling information is independent from the second scheduling information and may be the same as or different from the second scheduling information. For example, the NDP connection with external electronic device 1 1420 having switched to the low-power state and the NDP connection with external electronic device 2 1422 may be managed independently from each other. For example, the search for external electronic device 2 1422 may be performed based on at least one of OOB communication, a 3-layer search related to universal plug and play (uPnP), or a WLAN search (for example, Wi-Fi direct or NAN communication).

According to an embodiment, when external electronic device 3 1424 included in the same group as the electronic device 101 is found in operation 1431, the electronic device 101 may configure the NDP based on eighth scheduling information through SDF exchange with external electronic device 3 1424 and the data link configuration in operation 1433. For example, the eighth scheduling information is independent from the first scheduling information and/or the sixth scheduling information and may be the same as or different from the first scheduling information and/or the sixth scheduling information.

According to an embodiment, the electronic device 101 may switch the NDP connection with external electronic device 3 1424 to the low-power mode, based on the event related to switching to the low-power mode in operation 1435 and operation 1437. For example, when determining not to perform data communication with external electronic device 3 1424, the electronic device 101 may switch the NDP configuration with external electronic device 3 1424 to the low-power mode.

For example, the electronic device 101 may store information related to the NDP with external electronic device 3 1424, based on switching to the low-power mode. The electronic device 101 may maintain synchronization with external electronic device 3 1424, based on ninth scheduling information different from the eighth scheduling information, based on switching to the low-power mode. For example, external electronic device 3 1424 included in the same group as the electronic device 101 may include an external electronic device including the same user account as the electronic device 101. For example, the ninth scheduling information is independent from the second scheduling information and/or the seventh scheduling information and may be the same as or different from the second scheduling information and/or the seventh scheduling information. For example, the same group as that of the electronic device 101 may include at least one of a family group, a business group, a club group, or a friend group including the electronic device 101. For example, the external electronic device 3 1424 included in the same group as the electronic device 101 may be found based on at least one of OOB communication, a 3-layer search related to universal plug and play (uPnP), or a WLAN search (for example, Wi-Fi direct or NAN communication).

According to an embodiment, a method of operating an electronic device (for example, the electronic device 101 of FIG. 1, 2, 3, 4, 5, or 6) may include an operation of configuring an NAN data path (NDP) for data communication based on first scheduling information with an external electronic device (for example, the external electronic device 210, 220, or 230 of FIG. 2 or the external electronic device 600 of FIG. 6) included in an NAN cluster (for example, the NAN cluster 200 of FIG. 2). According to an embodiment, the method of operating the electronic device may include an operation of storing information related to the NDP, based on switching to a low-power mode related to an NDP connection. According to an embodiment, the method of operating the electronic device may include an operation of maintaining synchronization with the external electronic device, based on second scheduling information different from the first scheduling information. According to an embodiment, the method of operating the electronic device may include an operation of, in case that the data communication with the external electronic device is performed, performing the data communication with the external electronic device through the NDP with the external electronic device, based on the information related to the NDP.

According to an embodiment, the operation of configuring the NDP may include an operation of configuring the NDP with the external electronic device through service discovery frame (SDF) exchange with the external electronic device related to first scheduling information and a data link configuration.

According to an embodiment, the method of operating the electronic device may include an operation of determining whether to switch the NDP connection with the external electronic device to the low-power mode, based on an amount of data transmitted and/or received to and/or from the external electronic device for a predetermined time.

According to an embodiment, the method of operating the electronic device may include an operation of determining whether to switch the NDP connection with the external electronic device to the low-power mode, based on driving information of a function or an application program related to the data communication.

According to an embodiment, the operation of maintaining the synchronization with the external electronic device may include an operation of, in case that the electronic device is configured as a master device, transmitting a synchronization beacon during a predetermined transmission interval configured based on the second scheduling information.

According to an embodiment, the operation of maintaining the synchronization with the external electronic device may include an operation of, in case that the electronic device is not configured as a master device, maintaining the synchronization with the external electronic device, based on a synchronization beacon received from the external electronic device during a predetermined transmission interval configured based on the second scheduling information.

According to an embodiment, the operation of maintaining the synchronization with the external electronic device may include an operation of, in case that the electronic device and the external electronic device access an equal access point (AP), maintaining the synchronization with the external electronic device, based on time information of the AP.

According to an embodiment, the operation of performing the data communication with the external electronic device may include an operation of, in case that data communication with the external electronic device is performed, performing the data communication with the external electronic device through the NDP with the external electronic device, based on first scheduling information, according to determination that at least one lower scheduling included in the first scheduling information can be supported.

According to an embodiment, the method of operating the electronic device may include an operation of, in case that it is determined that at least some of the at least one lower scheduling included in the first scheduling information cannot be supported, generating third scheduling information, based on the first scheduling information, and an operation of performing the data communication with the external electronic device through the NDP with the external electronic device, based on the third scheduling information.

Embodiments of the disclosure in the specifications and drawings are presented to easily describe the technical content according to embodiments of the disclosure and provide specific examples for helping understanding of embodiments of the disclosure, but do not intent to limit the scope of the embodiments of the disclosure. Therefore, the range of various embodiments of the disclosure should be construed such that all changes or changed forms derived on the basis of the technical idea of various embodiments of the disclosure as well as the embodiments disclosed herein are included in the range of various embodiments of the disclosure.

## Claims

1. An electronic device comprising:
communication circuitry configured to support wireless LAN (WLAN) communication; and
a processor operatively connected to the communication circuitry,
wherein the processor is configured to:
configure an NAN data path (NDP) for data communication, based on first scheduling information, with an external electronic device included in a neighbor awareness networking (NAN) cluster;
store information related to the NDP, based on switching to a low-power mode related to an NDP connection;
maintain synchronization with the external electronic device, based on second scheduling information different from the first scheduling information; and
in case of performing the data communication with the external electronic device, perform the data communication with the external electronic device through the NDP with the external electronic device, based on the information related to the NDP.

2. The electronic device of claim 1, wherein the processor is configured to, based on an amount of data transmitted and/or received to and/or from the external electronic device for a predetermined time, determine whether to switch the NDP connection with the external electronic device to the low-power mode..

3. The electronic device of claim 1, wherein the processor is configured to, based on driving information of a function or an application program related to the data communication, determine whether to switch the NDP connection with the external electronic device to the low-power mode.

4. The electronic device of claim 1, wherein the processor is configured to, in case that the electronic device is configured as a master device, transmit a synchronization beacon during a predetermined transmission interval configured based on the second scheduling information.

5. The electronic device of claim 1, wherein the processor is configured to, in case that the electronic device is not configured as a master device, maintain the synchronization with the external electronic device, based on a synchronization beacon received from the external electronic device during a predetermined transmission interval configured based on the second scheduling information.

6. The electronic device of claim 1, wherein the processor is configured to:
in case that the electronic device and the external electronic device are connected to an identical access point (AP), acquire time information of the AP; and
maintain the synchronization with the external electronic device, based on the time information of the AP, during a predetermined transmission interval configured based on the second scheduling information.

7. The electronic device of claim 1, wherein the processor is configured to:
in case of performing the data communication with the external electronic device, determine whether at least one lower scheduling included in the first scheduling information can be supported; and
in case that it is determined that at least one lower scheduling included in the first scheduling information can be supported, perform the data communication with the external electronic device through the NDP with the external electronic device, based on the first scheduling information.

8. The electronic device of claim 7, wherein the processor is configured to:
in case that it is determined that at least some of the at least one lower scheduling included in the first scheduling information cannot be supported, generate third scheduling information, based on the first scheduling information; and
perform the data communication with the external electronic device through the NDP with the external electronic device, based on the third scheduling information.

9. A method of operating an electronic device, the method comprising:
configuring an NAN data path (NDP) for data communication, based on first scheduling information, with an external electronic device included in a neighbor awareness networking (NAN) cluster;
storing information related to the NDP, based on switching to a low-power mode related to an NDP connection;
maintaining synchronization with the external electronic device, based on second scheduling information different from the first scheduling information; and
in case of performing the data communication with the external electronic device, performing the data communication with the external electronic device through the NDP with the external electronic device, based on the information related to the NDP.

10. The method of claim 9, further comprising, based on at least one of an amount of data transmitted and/or received to and/or from the external electronic device for a predetermined time and driving information of a function or an application program related to the data communication, determining whether to switch the NDP connection with the external electronic device to the low-power mode.

11. The method of claim 9, wherein the maintaining of the synchronization with the external electronic device comprises, in case that the electronic device is configured as a master device, transmitting a synchronization beacon during a predetermined transmission interval configured based on the second scheduling information.

12. The method of claim 9, wherein the maintaining of the synchronization with the external electronic device comprises, in case that the electronic device is not configured as a master device, maintaining the synchronization with the external electronic device, based on a synchronization beacon received from the external electronic device during a predetermined transmission interval configured based on the second scheduling information.

13. The method of claim 9, wherein the maintaining of the synchronization with the external electronic device comprises:
in case that the electronic device and the external electronic device are connected to an identical access point (AP), acquiring time information of the AP; and
maintaining the synchronization with the external electronic device, based on the time information of the AP, during a predetermined transmission interval configured based on the second scheduling information.

14. The method of claim 9, wherein the performing of the data communication with the external electronic device comprises:
in case of performing the data communication with the external electronic device, determining whether at least one lower scheduling included in the first scheduling information can be supported; and
in case that it is determined that at least one lower scheduling included in the first scheduling information can be supported, performing the data communication with the external electronic device through the NDP with the external electronic device, based on the first scheduling information.

15. The method of claim 14, further comprising:
in case that it is determined that at least a part of the at least one lower scheduling included in the first scheduling information cannot be supported, generating third scheduling information, based on the first scheduling information; and
performing the data communication with the external electronic device through the NDP with the external electronic device, based on the third scheduling information.
